# EUROPÄISCHE PATENTANMELDUNG

(11) **EP 4 345 031 A1**
(43) Veröffentlichungstag der Anmeldung: **03.04.2024**
(21) Anmeldenummer: 23200003.4
(22) Anmeldetag: 27.09.2023
(51) Int. Cl.: B65G 1/04, B65G 1/06, B65G 47/57, B65G 1/00

(54) **SHUTTLE-SYSTEM UND VERFAHREN ZUM HANDHABEN EINES LADUNGSTRÄGERS**

(30) Priorität: 27.09.2022 DE 102022124753
(71) Anmelder: Gebhardt Fördertechnik GmbH, D-74889 Sinsheim (DE)
(72) Erfinder: GEBHARDT, Marco, 74889 Sinsheim (DE); KLOPFENSTEIN, Thomas, 67290 Wimmenau (FR)
(74) Vertreter: Patentanwälte und Rechtsanwalt Weiß, Arat & Partner mbB

(57) **Zusammenfassung**

Ein Shuttle-System und ein entsprechendes Verfahren zum Handhaben eines Ladungsträgers (4), wobei ein Ein- oder Auslagern des Ladungsträgers (4) in oder aus einem Regalbau (1) erfolgen soll, umfasst folgenden Schritt:
- temporäres Lagern des Ladungsträgers (4) auf einem Pufferplatz (7.1, 7.2), welcher zugleich als Übergabeplatz an einen Senkrechtförderer (5) dient, oder Passieren dieses Pufferplatzes (7.1), um den Ladungsträger (4) in einer Ein- und Auslager-Ebene (2) ein- oder aus dieser auszulagern.

## Beschreibung

### Technisches Gebiet

Die Erfindung betrifft ein Shuttle-System und ein Verfahren zum Handhaben eines Ladungsträgers nach den unabhängigen Ansprüchen.

### Stand der Technik

Gattungsgemässe Shuttle-Systeme und Verfahren sind aus dem Stand der Technik bekannt.

### Aufgabe der Erfindung

Die Aufgabe der vorliegenden Erfindung ist es, die Nachteile aus dem Stand der Technik zu überwinden.

### Lösung der Aufgabe

Zur Lösung der Aufgabe führen die Gegenstände der unabhängigen Ansprüche. Vorteilhafte Ausgestaltungen sind in den abhängigen Ansprüchen beschrieben.

Ein Shuttle-System gemäss einer bevorzugten Ausführungsform der vorliegenden Erfindung umfasst einen Regalbau mit einer Ein- und Auslager-Ebene und zumindest einer Lagerebene zum Lagern von Ladungsträgern. Der Regalbau kann genau eine Ein- und Auslager-Ebene umfassen. Es kann auch daran gedacht sein, dass der Regalbau mehrere Ein- und Auslager-Ebenen umfasst.

Im Rahmen der vorliegenden Erfindung sind "Ebenen", insbesondere die "Ein-und Auslager-Ebenen" sowie die "Lagerebenen" Bestandteile des Regalbaus. Der Begriff "Ebene" ist also vorzugsweise nicht allgemein als "auf dem selben Höhen-Niveau befindlich" zu verstehen, sondern im Sinne eines "Stockwerks" des Regalbaus.

Bei den Ladungsträgern kann es sich beispielsweise um Grossladungsträger handeln. Es kann sich um Paletten, Gitterboxen, Blechpaletten, sogenannte "Intermediate Bulk Container" (IBC-Container) oder dergleichen handeln. Auf den Ladungsträgern können sich Ladungen, d.h. Waren, Artikel, oder dergleichen gelagert befinden.

In der Ein- und Auslager-Ebene können sich auch Lagerplätze befinden. Die Ein- und Auslager-Ebene ist also nicht auf die Funktionen Einlagern und Auslagern beschränkt, sondern kann zusätzlich zum Lagern von Ladungsträgern genutzt werden. Dies kann vorteilhaft sein, weil bei einem Einlagern eines Ladungsträgers in der Ein- und Auslager-Ebene der nachstehend beschriebene Senkrechtförderer nicht benötigt wird, wodurch das Einlagern schneller erfolgen kann. Dasselbe gilt für ein Auslagern aus der Ein-und Auslager-Ebene.

Üblicherweise ist die Ein- und Auslager-Ebene die unterste Ebene im Regalbau eines Shuttle-Systems. Es kann jedoch auch an einen Regalbau gedacht sein, in welchem die Ein- und Auslager-Ebene nicht die unterste Ebene ist. Beispielsweise können aus Platzgründen mehrere Lagerebenen unterirdisch, sozusagen als "Kellergeschoss" angelegt sein. Ferner kann daran gedacht sein, die Ein- und Auslager-Ebene in Bezug auf eine Höhe des Regalbaus mittig anzuordnen, um eine mittlere Fahrzeit von nachstehend noch beschriebenen Senkrechtförderern zu verkürzen.

Das Shuttle-System umfasst ferner einen Senkrechtförderer zum Transport von Ladungsträgern zwischen den Ebenen des Regalbaus, sowie zumindest ein Shuttle, welches eingerichtet ist, in den Ebenen des Regalbaus zu verkehren. Der Senkrechtförderer ist vorzugsweise dem Regalbau zugeordnet. Besonders bevorzugt ist der Senkrechtförderer innerhalb des Regalbaus angeordnet.

Vorzugsweise verbindet und bedient der Senkrechtförderer sämtliche Ebenen des Regalbaus, auch Regal-Ebenen genannt. Es kann aber auch an Ausführungsformen, insbesondere mit mehreren Senkrechtförderern gedacht sein, bei denen jeder Senkrechtförderer nur einige, aber nicht alle Regal-Ebenen verbindet und bedient. Vorzugsweise verbindet und bedient jeder Senkrechtförderer jedoch zumindest die Ein- und Auslager-Ebene sowie mehrere Lagerebenen.

Vorzugsweise handelt es sich um ebenen-gebundene Shuttles, welche sich auf den Ebenen des Regalbaus in der gesamten Horizontalen, aber nicht vertikal bewegen können. Es kann jedoch auch an Gassen-gebundene Shuttles gedacht sein, welche sich nur entlang einer Geraden bewegen können.

Vorzugsweise ist auf jeder Ebene des Regalbaus zumindest ein Shuttle angeordnet.

Das Shuttle-System umfasst ferner zumindest einen Pufferplatz, welcher in der Ein- und Auslager-Ebene unmittelbar neben dem Senkrechtförderer angeordnet ist, wobei der zumindest eine Pufferplatz eingerichtet ist, einen Ladungsträger temporär aufzunehmen, wobei der zumindest eine Pufferplatz zur Aufnahme und Abgabe des Ladungsträgers einen lagerseitigen, einen Vorzonen-seitigen sowie einen Senkrechtförderer-seitigen Transferabschnitt umfasst. Bei dem zumindest einen Pufferplatz handelt es sich vorzugsweise um einen aktiven Pufferplatz, welcher beispielsweise von einer nachstehend noch beschriebenen Kettenförderer-Anordnung oder einem einzelnen Kettenförderer gebildet sein kann.

Die Transfer-Abschnitte könnten auch als Eingänge zu dem Pufferplatz bezeichnet werden.

Die Transferabschnitte können auch auf mehrere korrespondierende, beispielsweise über denselben Senkrechtförderer miteinander in Verbindung stehende Pufferplätze der Ein- und Auslager-Ebene verteilt sein. Jeder einzelne Pufferplatz muss also nicht sämtliche Transferabschnitte umfassen.

Im Rahmen der vorliegenden Erfindung werden meist nur die unmittelbar neben dem Senkrechtförderer angeordneten Pufferplätze lediglich als "Pufferplatz" bezeichnet. Die nicht unmittelbar neben dem Senkrechtförderer angeordneten Pufferplätze werden üblicherweise als "weiterer Pufferplatz" bezeichnet.

Jeder Pufferplatz und jeder weitere Pufferplatz kann von jeweils einem Kettenförderer gebildet werden. Derart in Reihe geschaltete Kettenförderer können die Kettenförderer-Anordnung bilden. Der Ladungsträger kann in der Kettenförderer-Anordnung von einem Kettenförderer zum nächsten weitergereicht werden. Vorzugsweise umfasst jeder Kettenförderer innerhalb der Kettenförderer-Anordnung einen eigenen Antrieb, so dass jeder der Kettenförderer unabhängig von den anderen Kettenförderern betrieben werden kann.

Im Rahmen der vorliegenden Erfindung kann jedoch auch daran gedacht sein, dass nicht jeder Pufferplatz von einem separaten Kettenförderer gebildet wird, sondern dass ein einziger Kettenförderer mehrere oder alle Pufferplätze bereitstellt. Bildet ein Kettenförderer beispielsweise zwei Pufferplätze, so sind diese beiden Pufferplätze nicht physisch voneinander getrennt, sondern liegen lediglich als Abschnitte oder Bereiche des sie bildenden Kettenförderers vor.

Im Allgemeinen ist daher festzuhalten, dass eine Kettenförderer-Anordnung zumindest einen Kettenförderer umfasst, welcher zumindest einen Pufferplatz ausbildet oder bereitstellt.

Das Shuttle ist ferner eingerichtet, einen auszulagernden Ladungsträger dem Pufferplatz zu übergeben und einen einzulagernden Ladungsträger von dem Pufferplatz zu übernehmen, wobei diese Übernahme und Übergabe über den lagerseitigen Transferabschnitt erfolgt.

Die vorbeschriebene Übernahme und Übergabe kann direkt oder indirekt, also beispielsweise über einen weiteren Pufferplatz, erfolgen.

Der Pufferplatz ist ferner eingerichtet, einen Ladungsträger auch von einem Fördermittel zu übernehmen oder an dieses zu übergeben, wobei dieses Fördermittel als Schnittstelle zwischen der Ein- und Auslager-Ebene und einer ausserhalb der Regal-Ebenen befindlichen Zone fungiert, und wobei diese Übernahme und Übergabe über den Vorzonen-seitigen Transfer-Abschnitt erfolgt. Mit den vorgenannten Regal-Ebenen sind vorzugsweise die Ein- und Auslager-Ebene sowie die Lagerebenen gemeint. Der Vorzonen-seitige Transfer-Abschnitt wird der Einfachheit auch in Ausführungsbeispielen ohne Lagervorzone als solcher bezeichnet.

Die ausserhalb der Regal-Ebenen befindliche Zone kann abhängig von der Bauweise des Regalbaus und der Auswahl des als Schnittstelle fungierenden Fördermittels in zahlreichen Varianten ausgestaltet sein.

Wie nachstehend noch näher ausgeführt wird, kann das als Schnittstelle fungierende Fördermittel vollständig oder teilweise in der ausserhalb der Regal-Ebenen befindlichen Zone verkehren oder dort angeordnet sein.

Beispielsweise kann daran gedacht sein, dem Regal eine Lagervorzone zuzuordnen, welche aus dem Stand der Technik bekannt ist. Hierbei kann die Ein- und Auslager-Ebene beispielsweise auf oder nahe des Bodenniveaus beispielsweise eines Hallenbodens oder dergleichen, üblicherweise auf Bodenniveau oder kurz darüber, angeordnet sein. In einer solchen Ausführungsform ist das als Schnittstelle fungierende Fördermittel vorzugsweise eingerichtet, um den Ladungsträger ohne Hilfsmittel an den Pufferplatz oder den weiteren Pufferplatz in der Ein- und Auslager-Ebene zu übergeben oder von dort zu übernehmen. Ein Fahrerloses Transportsystem (FTS) kann beispielsweise eine Hub-Einrichtung für den Ladungsträger umfassen, um gewisse geringe Höhen-Differenzen zum Pufferplatz oder zum weiteren Pufferplatz zu überwinden. Ein Kettenförderer oder dergleichen kann so angeordnet und ausgerichtet sein, dass eine direkte Übergabe oder Übernahme zu dem oder von dem (weiteren) Pufferplatz ohne Hilfsmittel möglich ist.

Wird im Rahmen der vorliegenden Erfindung von einem FTS gesprochen, so sind vorzugsweise die fahrerlosen Fahrzeuge gemeint, die im Stand der Technik teilweise auch als Fahrerloses Transportfahrzeug (FTF) bezeichnet werden.

Es kann auch daran gedacht sein, dass die Regal-Ebenen des Regalbaus die vorbeschriebene ausserhalb der Regal-Ebenen befindliche Zone überbauen, oder auf andere Weise deutlich oberhalb dieser Zone angeordnet sind. In solchen Fällen können Hilfsmittel vorgesehen sein, um bei der Übernahme oder Übergabe des Ladungsträgers von dem und an den (weiteren) Pufferplatz die Höhen-Differenz zwischen dem als Schnittstelle fungierenden Fördermittel und dem (weiteren) Pufferplatz zu überwinden. Ein solches Hilfsmittel kann beispielsweise ein Senkrechtförderer für den Ladungsträger oder das FTS sein. Es kann auch daran gedacht sein, dass das als Schnittstelle fungierende Fördermittel, beispielsweise ein FTS, die Höhen-Differenz mittels beispielsweise einer eingebauten Hub-Einrichtung selbst überwindet, so dass auf Hilfsmittel verzichtet werden kann.

Bei dem als Schnittstelle fungierenden Fördermittel kann es sich im Allgemeinen um ein beliebiges Fördermittel handeln, welches in der ausserhalb der Regal-Ebenen befindlichen Zone angeordnet ist oder dort verkehrt. Bei dem vorgenannten Fördermittel kann es sich um Stetigförderer oder Unstetigförderer handeln. Insbesondere kann hierbei, wie bereits mehrfach angedeutet, an FTS oder Kettenförderer gedacht sein.

Ein als Schnittstelle fungierendes FTS kann, abhängig von der Anordnung und Ausgestaltung des Regalbaus, auf verschiedene Weisen zur Übergabe oder Übernahme eines Ladungsträgers mit der Ein- und Auslager-Ebene interagieren.

Ist eine Lagervorzone vorhanden, so kann das FTS ausschliesslich oder überwiegend dort verkehren. Es ist auch denkbar, dass das FTS zwecks Übergabe und Übernahme von dem und an den Pufferplatz ein Stück weit in den Regalbau hineinfährt. Ein solches FTS kann also auch innerhalb des Regalbaus verkehren, insbesondere, indem es wie beschrieben ein Stück weit in diesen hineinfährt. Beispielsweise kann daran gedacht sein, dass das FTS in denjenigen Kettenförderer einfährt, welcher den Pufferplatz oder den weiteren Pufferplatz bildet.

Ist eine Zone, in welcher das FTS verkehrt, von den Regal-Ebenen überbaut, so kann das FTS eine unterhalb der Regal-Ebenen befindliche Fläche teilweise oder vollständig befahren. Somit kann eine Fläche ausserhalb des Grundrisses des Regalbaus, welche die FTS für ihre Fahrwege benötigen, zumindest deutlich kleiner ausfallen als bei anderen Varianten. Hierbei kann an Senkrechtförderer gedacht sein, welche den Ladungsträger vom FTS übernehmen und an den (weiteren) Pufferplatz übergeben, oder welche das FTS senkrecht zum (weiteren) Pufferplatz transportieren. Alternativ kann beispielsweise daran gedacht sein, dass das FTS eine Hub-Einrichtung aufweist, welche den Ladungsträger auf die Höhe des Pufferplatzes befördern kann, während sich das FTS auf seinem beispielsweise unterhalb der Ein- und Auslager-Ebene befindlichen Fahrweg befindet. Bei dem vorbeschriebenen Senkrechtförderer, welcher den Ladungsträger vom FTS übernimmt und an den Pufferplatz oder an den weiteren Pufferplatz übergibt, handelt es sich vorzugsweise nicht um den weiter vorne beschriebenen Senkrechtförderer, welcher zum Transport von Ladungsträgern zwischen den Ebenen des Regalbaus dient.

Der vorbeschriebene Senkrechtförderer kann ebenfalls das als Schnittstelle fungierende Fördermittel sein. Alternativ kann ein solcher Senkrechtförderer gemeinsam mit beispielsweise dem FTS diese Schnittstelle bilden. Es kann also daran gedacht sein, dass jede vorhandene Schnittstelle von einem einzigen Fördermittel gebildet wird, oder dass jede vorhandene Schnittstelle von einer Kombination umfassend zwei oder auch mehr als zwei Fördermittel gebildet wird.

Ein als Schnittstelle fungierender Kettenförderer kann ebenso beispielsweise in einer Lagervorzone oder einer anderen ausserhalb des Grundrisses des Regalbaus angeordneten Zone angeordnet sein. Alternativ kann ein solcher Kettenförderer unterhalb beispielsweise der Ein- und Auslager-Ebene angeordnet sein, wenn die Regal-Ebenen unmittelbar oberhalb seines Standorts liegen. Ein solcher Kettenförderer kann auch dann als Schnittstelle fungieren, wenn er sich zumindest teilweise oder zumindest überwiegend innerhalb des Regalbaus befindet. Ebenso wie vorstehend im Hinblick auf das FTS erwähnt, kann ein solcher Kettenförderer auch gemeinsam mit einem Senkrechtförderer, welche eine Höhendifferenz zwischen dem Standort des Kettenförderers und der Ein- und Auslager-Ebene überwindet, gemeinsam als Schnittstelle fungieren.

Im Allgemeinen ist das als Schnittstelle fungierende Fördermittel vorzugsweise ein aktives Fördermittel, welches beispielsweise mit einem Antrieb ausgestattet und eingerichtet ist, den Ladungsträger aktiv zu fördern.

Die vorstehend in Bezug auf das als Schnittstelle fungierende Fördermittel beschriebene Übernahme und Übergabe an den und von dem Pufferplatz kann direkt oder indirekt erfolgen.

Wenn der Einfachheit halber von "einem FTS" oder "einem Kettenförderer" oder im Allgemeinen "einem als Schnittstelle fungierenden Fördermittel" gesprochen wird, so ist dennoch vorzugsweise daran gedacht, dass das Shuttle-System eine Vielzahl solcher FTS oder Kettenförderer umfasst, die als Schnittstelle fungieren. In einigen Ausführungen kann auch daran gedacht sein, dass da Shuttle-System verschiedenartige als Schnittstelle fungierende Fördermittel, also beispielsweise sowohl FTS als auch Kettenförderer, umfasst.

Das als Schnittstelle fungierende Fördermittel kann sich im Wesentlichen oder teilweise ausserhalb des Regalbaus befinden. Handelt es sich bei diesem Fördermittel um einen Kettenförderer oder einen ähnlichen Stetigförderer, so kann dieser auch von Bestandteilen des Regalbaus umbaut sein, um beispielsweise zusätzliche Lagerplätze zu generieren. Das als Schnittstelle fungierende Fördermittel kann hierbei derart vollständig von Bestandteile des Regalbaus umbaut sein, dass es sich vollständig innerhalb des Regalbaus befindet, aber dennoch als Schnittstelle beispielsweise zu der Lagervorzone fungiert. Ein solches innerhalb des Regalbaus befindliches Fördermittel kann gemeinsam mit einem weiteren Fördermittel als Schnittstelle fungieren.

Dem Senkrechtförderer ist ein Mittel zugeordnet, welches den Ladungsträger aktiv von dem Pufferplatz an den Senkrechtförderer übergeben oder von diesem übernehmen kann, wobei diese Übernahme und Übergabe über den Senkrechtförderer-seitigen Transferabschnitt erfolgt. Hierbei meint "zugeordnet", dass der Senkrechtförderer das vorbeschriebene Mittel umfassen kann, oder es sich um ein separates Mittel handelt, welches so angeordnet ist, dass es die vorbeschriebene Übernahme und Übergabe bewerkstelligen kann. Dieses separate Mittel kann beispielsweise an einer beliebigen Struktur im Regalbau befestigt sein. Umfasst der Senkrechtförderer ein aktives Mittel zur Übergabe, beispielsweise eine nachstehend noch näher beschriebenen Teleskopgabel, so besteht der Vorteil, dass nur der Senkrechtförderer dieses Mittel umfassen muss. Soll beispielsweise eine Struktur am Regalbau für die Übernahme und Übergabe von Ladungsträgern von und auf den Senkrechtförderer sorgen, so müsste auf jeder Ebene des Regalbaus eine entsprechende Struktur vorgesehen sein. Eine solche Ausführungsform ist dennoch denkbar und von der vorliegenden Erfindung umfasst. Bei einer solchen Struktur kann es sich um Stempel handeln, welche den Ladungsträger schieben können, oder um andere geeignete Einrichtungen.

Eine Richtung, entlang welcher der Pufferplatz den Ladungsträger an das als Schnittstelle fungierende Fördermittel übergibt oder von diesem übernimmt, kann parallel zu einer Richtung verlaufen, entlang welcher das Shuttle den Ladungsträger an den Pufferplatz übergibt oder von diesem übernimmt. Sind mehrere, insbesondere zwei unmittelbar neben dem Senkrechtförderer angeordnete Pufferplätze vorhanden, so gelten die vorstehenden Anmerkungen vorzugsweise für beide Pufferplätze.

Eine Richtung, entlang welcher der Senkrechtförderer den Ladungsträger an den Pufferplatz übergibt oder von diesem übernimmt, verläuft orthogonal zu der Richtung, entlang welcher das als Schnittstelle fungierende Fördermittel und vorzugsweise das Shuttle den Ladungsträger an den Pufferplatz übergeben oder von diesem übernehmen. Sind ein Pufferplatz und mehrere weitere Pufferplätze vorhanden, welche, wie nachstehend noch erläutert, von einer Kettenförderer-Anordnung oder dergleichen gebildet werden, so verläuft also eine Übergabe-Richtung zwischen Senkrechtförderer und Pufferplatz orthogonal zu einer Längsrichtung der Kettenförderer-Anordnung oder dergleichen.

Das vorbeschriebene Shuttle-System bietet den Vorteil, einen Materialfluss beim Ein- und Auslagern von den hierfür innerhalb des Regalbaus und beispielsweise in der Lagervorzone genutzten Fahrzeugen oder anderen Fördermitteln dahingehend zu entkoppeln, dass für eine Übergabe eines Ladungsträgers an sowie eines Ladungsträgers von einem der Fahrzeuge oder an sowie von dem Senkrechtförderer das jeweilige Fahrzeug dank des zumindest einen Pufferplatzes nicht warten oder bereitstehen muss.

Ein weiterer Vorteil eines neben dem oder den Pufferplätzen angeordneten Senkrechtförderers besteht darin, dass der Senkrechtförderer einem in der Ein-und Auslager-Ebene einzulagernden Ladungsträger nicht "im Weg steht". Werden der Pufferplatz und gegebenenfalls die weiteren Pufferplätze von derselben Kettenförderer-Anordnung gebildet, so "unterbricht" der Senkrechtförderer eine von der Kettenförderer-Anordnung gebildete Förderstrecke also nicht. Ein aus der Lagervorzone kommender Ladungsträger kann ohne Interaktion mit dem Senkrechtförderer in der Ein- und Auslager-Ebene eingelagert werden.

Theoretisch wäre es zwar denkbar, den Senkrechtförderer in Reihe mit dem zumindest einen Pufferplatz auszubilden. Die Übergabe-Richtung zwischen Senkrechtförderer und Pufferplatz könnte hierbei parallel zur Längsrichtung der Kettenförderer-Anordnung verlaufen bzw. mit dieser zusammenfallen. Da eine solche Anordnung des Senkrechtförderers die Kettenförderer-Anordnung in der Ein- und Auslager-Ebene jedoch "unterbrechen" würde, und ein in der Ein- und Auslager-Ebene einzulagernder Ladungsträger stets den Senkrechtförderer passieren und gegebenenfalls auf diesen warten müsste, wenn er sich momentan in einer höher gelegenen Lagerebene befindet, ist diese Variante im Rahmen der vorliegenden Erfindung nicht bevorzugt.

Ist der Senkrechtförderer neben der Kettenförderer-Anordnung oder dergleichen angeordnet, welche einen Pufferplatz und gegebenenfalls weitere Pufferplätze bildet, so besteht ein weiterer Vorteil darin, dass das Shuttle zur Übergabe und Übernahme des Ladungsträgers in die Kettenförderer-Anordnung oder dergleichen, vorzugsweise in einen endständigen Kettenförderer dieser Kettenförderer-Anordnung einfahren kann.

Das Shuttle-System kann einen weiteren Pufferplatz zwischen dem Vorzonen-seitigen Transfer-Abschnitt und dem als Schnittstelle fungierenden Fördermittel umfassen. Dieser weitere Pufferplatz sich also vorzugsweise zwischen dem Vorzonen-seitigen Transfer-Abschnitt und der Lagervorzone. Vorzugsweise schliessen sich ein oder mehrere solcher weiteren Pufferplätze unmittelbar an den Vorzonen-seitigen Transfer-Abschnitt an. Diese weiteren Pufferplätze bieten den Vorteil, dass der von dem Senkrechtförderer bediente Pufferplatz jeweils nur sehr kurzzeitig belegt ist, weil ein auszulagernder Ladungsträger nach dem Abstellen auf dem Pufferplatz unmittelbar zu einem der weiteren Pufferplätze befördert werden kann.

Im Rahmen der vorliegenden Erfindung kann das als Schnittstelle fungierende Fördermittel optional als Teil des Shuttle-Systems aufgefasst werden, dies ist aber nicht zwingend.

Der Senkrechtförderer kann das oben bereits beschriebene Mittel umfassen, welches den Ladungsträger aktiv von dem Pufferplatz zum Senkrechtförderer und zurück transportieren kann. Hierbei kann es sich um eine Teleskopgabel handeln. Alternativ kann daran gedacht sein, dem Pufferplatz einen Eckumsetzer zuzuordnen oder den Pufferplatz mit einem solchen Eckumsetzer auszustatten. Der Eckumsetzer kann den Pufferplatz bilden und insoweit alternativ zu einem den Pufferplatz bildenden Kettenförderer eingesetzt werden. Der Eckumsetzer erlaubt vorzugsweise den Transport eines Ladungsträgers sowohl entlang der Übergabe-Richtung, d.h. zum Senkrechtförderer, als auch entlang der Längsrichtung.

Dem Senkrechtförderer können genau zwei unmittelbar benachbarte Pufferplätze zugeordnet sein. Diese können ein Doppelspiel erlauben und somit Leerfahrten des Senkrechtförderers vermeiden.

Das Shuttle-System kann zumindest einen weiteren Pufferplatz umfassen, welcher sich an den lagerseitigen Transfer-Abschnitt anschliesst.

Der Pufferplatz und die weiteren Pufferplätze können entlang einer Geraden angeordnet sein. Die vorgenannten Pufferplätze können von einem Stetigförderer, beispielsweise einem Kettenförderer, gebildet werden. Dieser Kettenförderer kann Teil der bereits beschriebenen Kettenförderer-Anordnung sein.

Das Shuttle-System kann ein Zentriermittel umfassen, welches eingerichtet ist, den Ladungsträger zu zentrieren, nachdem dieser von dem als Schnittstelle fungierenden Fördermittel angeliefert wurde und bevor dieser von dem Shuttle oder von dem Senkrechtförderer übernommen wurde. Alternativ oder zusätzlich kann auch daran gedacht sein, dass durch ein Zusammenwirken von Shuttle und Zentriermittel eine Zentrierung erfolgt, was im Hinblick auf die Figuren ausführlicher beschrieben ist. Das Zentriermittel kann Fehlplatzierungen beseitigen, beispielsweise etwaige Verdrehungen oder Verschiebungen des Ladungsträgers gegenüber einer gewünschten Position. Insbesondere das Shuttle ist empfindlich gegenüber nicht korrekt positionierten, d.h. nicht zentrierten Ladungsträgern, was zu Fehlern und Störungen im üblicherweise schwer zugänglichen Regalbau führen kann. Das vorgenannten Zentriermittel befindet sich vorzugsweise an dem Pufferplatz.

Auch der weitere Pufferplatz, von welchem das Shuttle in der Ein- und Auslager-Ebene den Ladungsträger übernehmen kann, welcher zuvor den Pufferplatz passiert hat, kann zumindest ein Zentriermittel umfassen.

Das Shuttle-System kann einen Übergabeplatz umfassen, welcher sich vorzugsweise in der Lagerebene befindet. Dieser Übergabeplatz kann eingerichtet sein, einen Ladungsträger temporär aufzunehmen. Der Übergabeplatz kann ferner zumindest ein Zentriermittel umfassen, welches eingerichtet ist, einen Ladungsträger zu zentrieren, wenn dieser von dem Shuttle oder dem Senkrechtförderer auf dem Übergabeplatz abgestellt wird.

Der Übergabeplatz kann zwei Abstell-Schienen zum Abstellen des Ladungsträgers umfassen, wobei auf diesen Abstell- Schienen jeweils ein Zentriermittel angeordnet sein kann, wobei eine lichte Weite zwischen den Zentriermitteln mindestens der lichten Weite zwischen den Abstell-Schienen entsprechen kann.

Die Zentriermittel können beliebig geformt sein. Im Allgemeinen kann daran gedacht sein, dass die Zentriermittel schräge Flächen umfassen, an welchen der Ladungsträger zwecks Zentrierung entlanggleiten kann, wenn er abgesenkt wird. Die Zentriermittel können schräg zur Mitte des Puffer- oder Übergabeplatzes, an welchem sie angeordnet sind, abfallende Flächen umfassen. Wie im Rahmen der vorliegenden Erfindung bereits beschrieben, kann auch an Zentriermittel gedacht sein, welche die Zentrierung bewirken, indem beispielsweise ein auf einem Kettenförderer befindlicher Ladungsträger gegen das Zentriermittel gefahren wird, und sich nötigenfalls beispielsweise dreht, um eine Fehlpositionierung im Sinne einer Drehung zu korrigieren. Solche Zentriermittel können als vertikale Flächen ausgebildet sein, die also nicht schräg zur Mitte des betreffenden Puffer- oder Übergabeplatzes hin abfallen. Das Zentriermittel kann beispielsweise klappbar, schwenkbar oder versenkbar ausgebildet sein. Nach dem Zentrieren kann das Zentriermittel beispielsweise weggeklappt oder versenkt werden, um einen weiteren Transport des Ladungsträgers insbesondere durch die Kettenförderer-Anordnung, zu erlauben.

Das vorbeschriebene klappbare, schwenkbare, versenkbare oder anderweitig bewegliche Zentriermittel kann innerhalb des lagerseitigen Transferabschnitts oder in dessen unmittelbarer Nachbarschaft angeordnet sein.

Einem Ausführungsbeispiel gemäss kann nur die Ein- und Auslagerungsebene aktive Pufferplätze umfassen, welche einen Transport dort abgestellter Ladungsträger bewirken können. Die Lagerebenen umfassen in diesem Ausführungsbeispiel passive Pufferplätze, beispielsweise in Form von Abstell-Schienen, welche einen Ladungsträger nur temporär aufnehmen, aber nicht bewegen können. Die Shuttles sind in diesem Ausführungsbeispiel ebenengebunden, können sich also horizontal in der Ebene bewegen, in welcher sie sich befinden, diese Ebene aber nicht selbstständig, also ohne beispielsweise von einem Senkrechtförderer transportiert zu werden, verlassen.

Hinsichtlich der Abstell-Schienen sei erwähnt, dass sämtliche Fahrwege oder ein überwiegender Teil der Fahrwege des Regalbaus Abstell-Schienen und darunter angeordnete Fahrschienen für die Shuttles umfassen können.

Das Shuttle-System kann mehrere der vorbeschriebenen Anordnungen umfassend jeweils einen Senkrechtförderer und zumindest einen unmittelbar benachbarten Pufferplatz in der Ein- und Auslagerungsebene umfassen. Vorzugsweise umfasst die Ein- und Auslagerungsebene zumindest einen Pufferplatz für die Auslagerung und zumindest einen Pufferplatz für die Einlagerung von Ladungsträgern. Bedient ein Senkrechtförderer zwei Pufferplätze, so dient vorzugsweise einer der Pufferplätze der Einlagerung und der andere der Auslagerung. Der Senkrechtförderer kann hierbei ein Doppelspiel ausführen.

Dem bzw. jedem Pufferplatz kann alternativ auch genau ein Senkrechtförderer zugeordnet sein. In einer solchen Konstellation führen die Senkrechtförderer in der Regel Einzelspiele aus.

Der vorstehend meist einfach als "Pufferplatz" bezeichnete unmittelbar neben dem Senkrechtförderer befindliche Pufferplatz kann zugleich auch als Übergabe- bzw. Übernahmeplatz für den Senkrechtförderer bezeichnet werden.

Dieser Pufferplatz kann zugleich das als Schnittstelle fungierende Fördermittel an den Senkrechtförderer und die in den Regal-Ebenen verkehrenden Shuttles anbinden.

Das Shuttle-System kann im Regalbau mehrere Senkrechtförderer umfassen. Sind die Flächen der Ebenen, also der Ein- und Auslager-Ebene sowie der Lagerebenen gross und umfassen entsprechend viele Lagerplätze, so kann es sinnvoll sein, eine Vielzahl von Senkrechtförderern einzusetzen. Diese können in einem gewissen Abstand voneinander angeordnet sein. Alternativ kann auch daran gedacht sein, mehrere unmittelbar nebeneinander angeordnete Senkrechtförderer vorzusehen. In diesem Fall können mehrere unmittelbar benachbarte Pufferplätze, welche zugleich als Übergabeplätze fungieren, vorgesehen sein.

**Die vorliegende Erfindung umfasst neben den Ausführungsvarianten des vorstehend beschriebenen Shuttle-Systems noch das nachstehend beschriebene Verfahren. Einzelheiten und Details, welche vorstehend im Hinblick auf das Shuttle-System beschrieben wurden, gelten auch für das nachstehend beschriebene Verfahren und umgekehrt.**

Ein Verfahren zum Handhaben eines Ladungsträgers, wobei ein Ein- oder Auslagern des Ladungsträgers in oder aus einem Regalbau erfolgen soll, kann folgenden Schritt umfassen:
- temporäres Lagern des Ladungsträgers auf einem Pufferplatz, welcher zugleich als Übergabeplatz an einen Senkrechtförderer dient, oder Passieren dieses Pufferplatzes, um den Ladungsträger in einer Ein- und Auslager-Ebene ein- oder aus dieser auszulagern.

Das temporäre Lagern des Ladungsträgers auf dem Pufferplatz kann sich über einen nur sehr kurzen Zeitraum erstrecken, und könnte demnach auch als "Zwischenhalt" bezeichnet werden. Dennoch ist im Rahmen des Verfahrens von einem Lagern die Rede.

Der Regalbau kann Teil eines vorstehend bereits beschriebenen Shuttle-Systems sein, und zumindest eine Ein- und Auslager-Ebene sowie Lagerebenen umfassen, in welchen Shuttles verkehren.

Im Rahmen des Verfahrens kann ein Einlagern des Ladungsträgers in dem Regalbau erfolgen, wobei folgende Schritte durchgeführt werden:
- ein Fördermittel befördert den Ladungsträger in die Ein- und Auslager-Ebene, wo der Ladungsträger zu dem Pufferplatz befördert wird,
- falls der Ladungsträger in der Ein- und Auslager-Ebene eingelagert werden soll, passiert er den Pufferplatz, und wird von einem in der Ein- und Auslager-Ebene verkehrenden Shuttle übernommen,
- falls der Ladungsträger in einer Lagerebene eingelagert werden soll, wird er auf dem Pufferplatz von dem Senkrechtförderer übernommen und zur Lagerebene befördert.

Das vorbeschriebene Befördern des Ladungsträgers in die Ein- und Auslager-Ebene meint hierbei vorzugsweise, dass der Ladungsträger beispielsweise aus einer Lagervorzone kommend in die Ein- und Auslager-Ebene des Regalbaus gebracht wird. Diese Ein- und Auslager-Ebene bezeichnet hierbei vorzugsweise das entsprechende Stockwerk des Regalbaus. Es ist also vorzugsweise unerheblich, von welchem Höhenniveau her kommend der Ladungsträger auf dem Fördermittel zu der Ein- und Auslager-Ebene befördert wird. Das Befördern des Ladungsträgers in die Ein- und Auslager-Ebene umfasst also nicht zwingend eine vertikale Bewegung des Ladungsträgers.

Der Ladungsträger kann hierbei unmittelbar, oder mittelbar über eine Kettenförderer-Anordnung oder dergleichen, welche den Pufferplatz und gegebenenfalls weitere Pufferplätze bildet, zu dem Pufferplatz befördert werden.

Die Lagerebene, vorzugsweise eine Vielzahl von Lagerebenen, ist oder sind üblicherweise oberhalb der Ein- und Auslager-Ebene angeordnet. Es kann aber daran gedacht sein, zumindest eine oder einen Teil der Lagerebenen unterhalb der Ein- und Auslager-Ebene anzuordnen.

Im Rahmen des Verfahrens kann ein Auslagern des Ladungsträgers aus dem Regalbau erfolgen, wobei folgende Schritte durchgeführt werden:
- das Shuttle oder der Senkrechtförderer befördert den Ladungsträger zu dem Pufferplatz,
- ein Fördermittel übernimmt den Ladungsträger.

Das Shuttle kann den Ladungsträger direkt zu dem Pufferplatz befördern. Bevorzugt befördert das Shuttle den Ladungsträger indirekt zu dem Pufferplatz, indem es diesen zuvor an einen weiteren Pufferplatz übergibt, von welchem aus der Ladungsträger zu dem Pufferplatz gelangt. Dies gilt vorzugsweise für Shuttles, welche in der Ein- und Auslager-Ebene verkehren. Ein in einer der Lagerebenen verkehrendes Shuttle kann einen Ladungsträger indirekt zu dem Pufferplatz in der Ein- und Auslager-Ebene befördern, indem es den Ladungsträger zu einem Übergabeplatz in der Lagerebene befördert, von welchem aus der Senkrechtförderer den Ladungsträger übernimmt.

Soll der Ladungsträger eingelagert werden, so kann daran gedacht sein, dass der Ladungsträger vor dem temporären Lagern auf dem Pufferplatz oder vor dem Passieren des Pufferplatzes auf einem weiteren Pufferplatz temporär gelagert wird, falls der Pufferplatz von einem anderen Ladungsträger belegt ist.

Der zumindest eine weitere Pufferplatz kann sich zwischen einer Lagervorzone, von welcher aus der Ladungsträger zu dem Regalbau befördert wird, und dem Pufferplatz befinden.

Der Pufferplatz kann von einem anderen Ladungsträger belegt sein, während der Senkrechtförderer einen Auftrag ausführt, weshalb er den auf dem Pufferplatz wartenden Ladungsträger noch nicht aufnehmen kann.

Soll der Ladungsträger ausgelagert werden, so kann daran gedacht sein, dass der Ladungsträger vor dem temporären Lagern auf dem Pufferplatz oder vor dem Passieren des Pufferplatzes auf einem weiteren Pufferplatz temporär gelagert wird, falls der Pufferplatz von einem anderen Ladungsträger belegt ist.

Der weitere Pufferplatz kann sich zwischen einem Ort, an welchem das Shuttle den Ladungsträger abgibt, und dem Pufferplatz befinden.

Der Pufferplatz kann von einem anderen Ladungsträger belegt sein, während der Senkrechtförderer einen Auftrag ausführt, weshalb er den auf dem Pufferplatz wartenden Ladungsträger noch nicht aufnehmen kann.

Sämtliche Ausführungsvarianten der vorbeschriebenen Verfahren können mit sämtlichen Ausführungsvarianten des eingangs beschriebenen Shuttle-Systems durchgeführt werden.

Im Rahmen von Ausführungsformen des vorbeschriebenen Verfahrens kann auch an das Umlagern eines Ladungsträgers, beispielsweise von einer Lagerebene in die Ein- und Auslager-Ebene oder umgekehrt gedacht sein. Ein solches Umlagern umfasst Verfahrensschritte der vorbeschriebenen Ein- und Auslager-Vorgänge. Soll ein Ladungsträger beispielsweise von einem Lagerplatz in der Lagerebene auf einen Lagerplatz in der Ein- und Auslager-Ebene umgelagert werden, so wird dieser zuerst, wie im Hinblick auf das Auslagern beschrieben, von dem Senkrechtförderer auf die Ein- und Auslager-Ebene transportiert und dort an den Pufferplatz übergeben. Danach werden die in Bezug auf das Einlagern in der Ein- und Auslager-Ebene beschriebenen Schritte durchgeführt. Ein Umlagern eines Ladungsträgers von einem Lagerplatz in der Ein- und Auslager-Ebene zu einem Lagerplatz in einer Lagerebene erfolgt, indem zunächst die für das Auslagern beschriebenen Schritte durchgeführt werden. Am Pufferplatz angekommen übernimmt der Senkrechtförderer den Ladungsträger und transportiert diesen in die Lagerebene, wo dann die im Hinblick auf das Einlagern schon beschriebenen Schritte durchgeführt werden.

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
den Figuren 1 bis 3 drei ausschnittsweise Darstellungen von Ein- und Auslager-Ebenen 2 verschiedener Ausführungsformen eines erfindungsgemässen Shuttle-Systems,
den Figuren 4 und 5 jeweils eine ausschnittsweise Darstellung einer Lagerebene 3 der Ausführungsform gemäss Figur 1 in unterschiedlichen Perspektiven, sowie
der Figur 6 einen Übergabeplatz 14.1.

### Ausführungsbeispiel

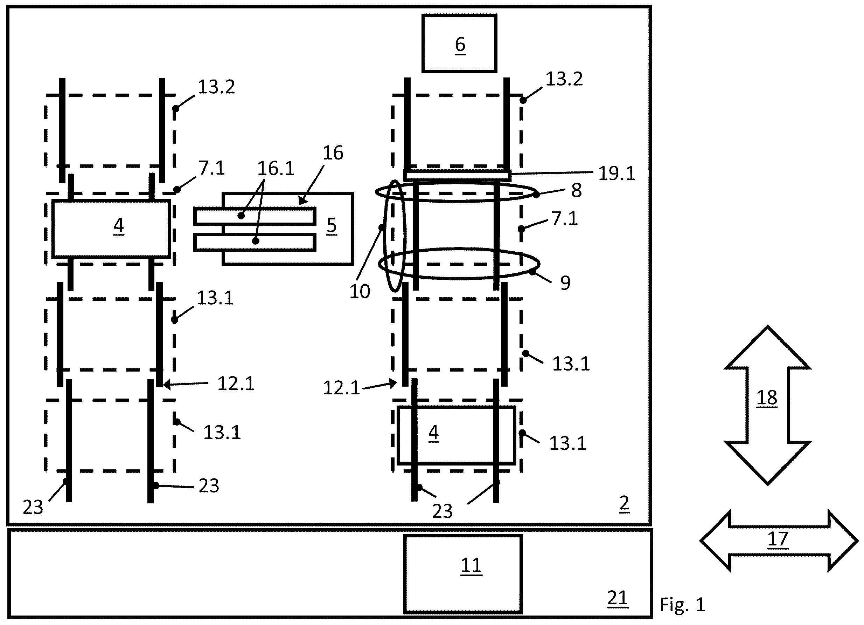

In Figur 1 ist eine erste Ausführungsform eines erfindungsgemässen Shuttle-Systems teilweise dargestellt. Die Figur 1 zeigt schematisch einen Ausschnitt einer Ein- und Auslager-Ebene 2 dieser Ausführungsform sowie einen Ausschnitt einer Lagervorzone 21. In Figur 1 sind ein Ladungsträger 4, ein Senkrechtförderer 5 mit einer zwei Zinken 16.1 umfassenden Teleskopgabel 16, ein Shuttle 6, zwei unmittelbar neben den Senkrechtförderer 5 angeordnete Pufferplätze 7.1 mit Transfer-Abschnitten 8, 9, 10, ein FTS 11, eine Kettenförderer-Anordnung 12.1 umfassend vier in Reihe angeordnete zweispurige Kettenförderer mit jeweils zwei Ketten 23, mehrere weitere Pufferplätze 13.1, 13.2, eine Richtung 17 und eine orthogonal dazu verlaufende Richtung 18 sowie ein bewegliches Zentriermittel 19.1 zu erkennen. Die links in Figur 1 dargestellte Kettenförderer-Anordnung 12.1 dient, was nachfolgend noch näher beschrieben ist, der Auslagerung, und umfasst daher im Gegensatz zu der rechts dargestellten Kettenförderer-Anordnung 12.1 kein Zentriermittel 19.1.

Der links in Figur 1 dargestellte Pufferplatz 7.1, auf welchem sich einer der beiden in Figur 1 dargestellten Ladungsträger 4 befindet, umfasst ebenso wie der rechts dargestellte Pufferplatz 7.1 die drei Transferabschnitte 8, 9, 10, welche jedoch der besseren Übersicht halber auf der linken Seite nicht eingezeichnet sind.

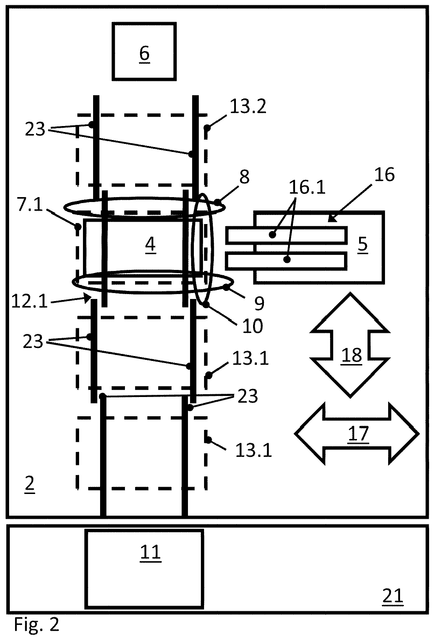

In Figur 2 ist eine zweite Ausführungsform eines erfindungsgemässen Shuttle-Systems teilweise dargestellt. Die Figur 2 zeigt schematisch einen Ausschnitt einer Ein- und Auslager-Ebene 2 dieser Ausführungsform sowie einen Ausschnitt einer Lagervorzone 21. Hinsichtlich ihre Aufbaus gleicht die Anordnung nach Figur 2 im Wesentlichen der linken Seite der Figur 1. Der Pufferplatz 7.1 gemäss Figur 2 ist unmittelbar neben den Senkrechtförderer 5 angeordnet.

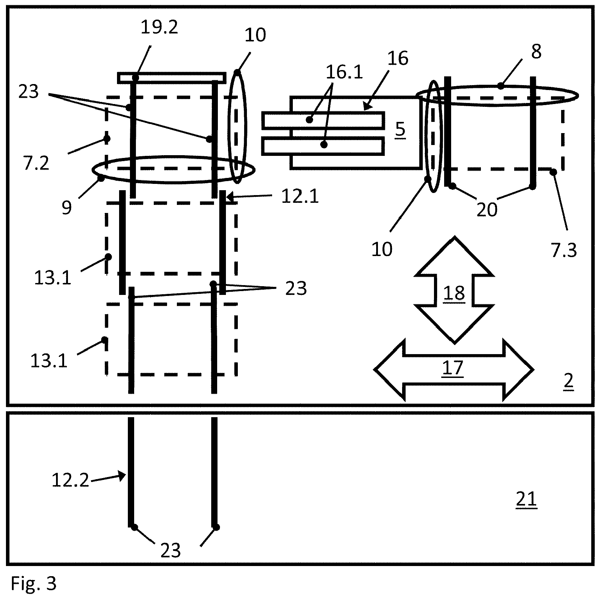

In Figur 3 ist eine dritte Ausführungsform eines erfindungsgemässen Shuttle-Systems teilweise dargestellt. Die Figur 3 zeigt schematisch einen Ausschnitt einer Ein- und Auslager-Ebene 2 dieser Ausführungsform sowie einen Ausschnitt einer Lagervorzone 21. Im Vergleich zu der in Figur 2 dargestellten Ausführungsform umfasst die in Figur 3 gezeigte Ausführungsform statt eines FTS 11 einen Kettenförderer 12.2 in der Lagervorzone 21. Ferner umfasst die Ausführungsform nach Figur 3 keinen weiteren Pufferplatz 13.2, welcher an den lagerseitigen Transferabschnitt 8 angrenzt. Der Pufferplatz 7.2 umfasst zwar einen Vorzonen-seitigen Transferabschnitt 9 und einen Senkrechtförderer-seitigen Transferabschnitt 10, aber keinen lagerseitigen Transferabschnitt 8, sondern stattdessen ein Zentriermittel 19.2 in Form eines starren Anschlags. Neben dem Senkrechtförderer 5 und gegenüber des Pufferplatzes 7.2 ist ein zusätzlicher Pufferplatz 7.3 angeordnet, welcher aus Abstell-Schienen 20 gebildet wird. Dieser Pufferplatz 7.3 umfasst einen Senkrechtförderer-seitigen Transferabschnitt 10 und einen lagerseitigen Transferabschnitt 8. Die Pufferplätze 7.2, 7.3 sind unmittelbar neben dem Senkrechtförderer 5 angeordnet.

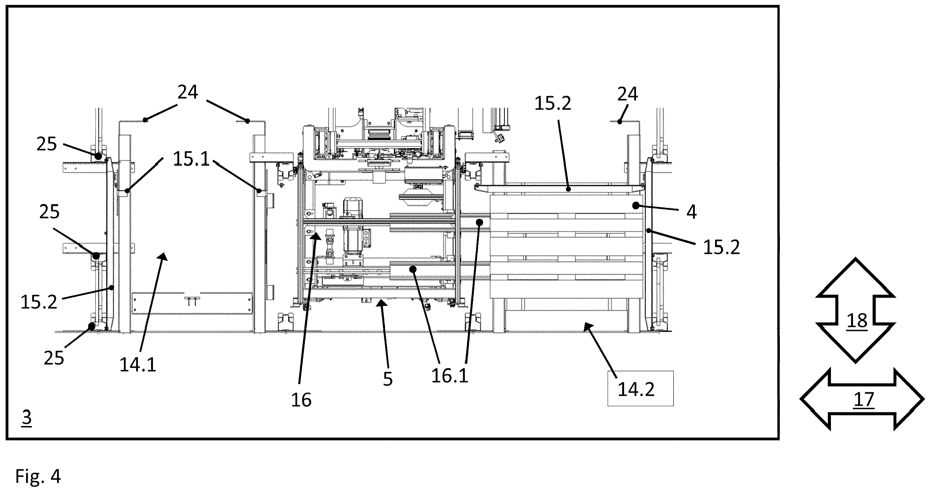

In Figur 4 ist eine Draufsicht auf eine Lagerebene 3 der ersten Ausführungsform des Shuttle-Systems dargestellt. Die Lagerebene 3 der Figur 4 korrespondiert insoweit mit der Ein- und Auslager-Ebene 2 gemäss Figur 1. In der Lagerebene 3 sind zwei Übergabeplätze 14.1, 14.2, der Senkrechtförderer 5 mit Teleskopgabel 16, sowie Zentriermittel 151, 15.2 erkennbar. In Figur 4 ist ferner ein Regalbau 1 erkennbar, welcher unter anderem Regalsteher 25, Abstell-Schienen 20 für die Ladungsträger 4 und Fahrschienen 22 für die Shuttles 6 umfasst. Bei den Zentriermitteln 15.1 kann es sich um einfache Anschläge handeln. Ferner sind Stopper 24 zur Begrenzung einer Einfahrtiefe des Shuttles 6 in die Übergabeplätze 14.1, 14.2, in der Darstellung nach Figur 4 also entlang der Richtung 18 - in der Zeichnung "nach oben" - erkennbar.

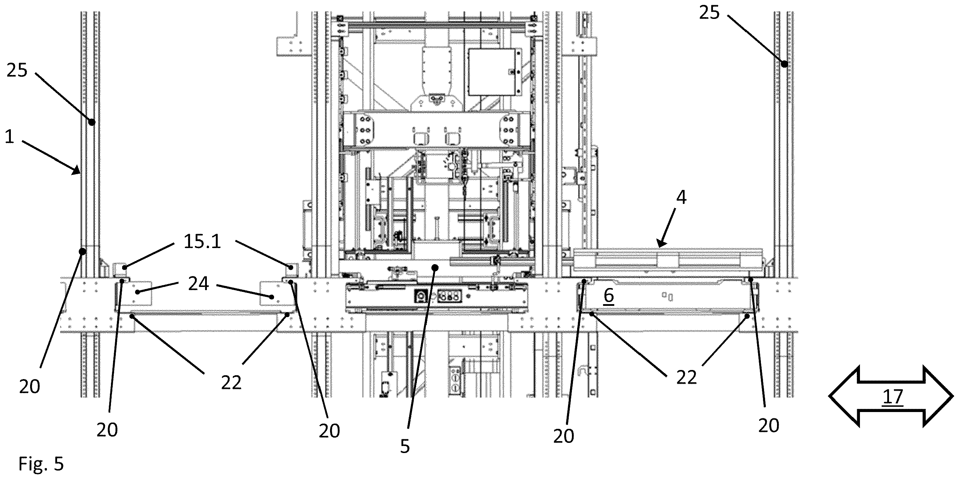

Figur 5 zeigt eine Seitenansicht der Anordnung gemäss Figur 4.

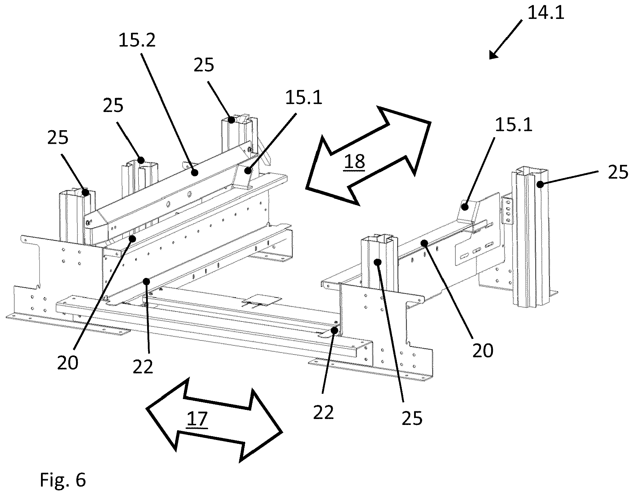

Figur 6 zeigt den Übergabeplatz 14.1 nach Figur 4, wobei unter anderem mehrere Regalsteher 25, also Teile des Regalbaus 1, erkennbar sind. Die Abstell-Schienen 20 sowie die Fahrschienen 22 für das (nicht gezeigte) Shuttle 6 sind erkennbar. Ferner sind Zentriermittel 15 erkennbar: Zum einen umfasst der Übergabeplatz 14.1 ein parallel zu den Schienen 20, 22 verlaufendes Zentriermittel 15.2. Zum anderen umfasst er zwei auf den Abstell-Schienen 20 angeordnete schmale Zentriermittel 15.1, welche nicht über die Abstell-Schienen 20 hinausragen. Eine in Richtung 17 gemessene lichte Weite zwischen den Zentriermitteln 15.1 ist also mindestens so gross, wie die in Richtung 17 gemessene lichte Weite zwischen den Abstell-Schienen 20.

### Bezugnehmend auf die Figuren 1 bis 6 erklärt sich die Funktionsweise der erfindungsgemässen Vorrichtung folgendermassen:

In Bezug auf die Figuren 1 bis 3 wird nachstehend zunächst ein Ein- und Auslagern erläutert.

Die links in Figur 1 dargestellte Kettenförderer-Anordnung 12.1 dient dem Auslagern von Ladungsträgern 4 aus der Ein- und Auslager-Ebene 2 oder einer höher oder niedriger gelegenen Lagerebene 3. Die rechts in Figur 1 dargestellte Kettenförderer-Anordnung 12.1 dient dem Einlagern von Ladungsträgern 4, welche aus der Lagervorzone 21 kommend eingelagert werden sollen. Beide Kettenförderer-Anordnungen 12.1 werden von demselben Senkrechtförderer 5 bedient. Das in Figur 1 dargestellte System erlaubt also ein Doppelspiel, bei welchem Leerfahrten des Senkrechtförderers 5 vermieden oder zumindest reduziert werden, weil dieser für das Ein- und Auslagern zuständig ist. Ferner werden weniger Senkrechtförderer 5 benötigt, wenn diese Doppelspiele durchführen. Nach dem Einlagern eines Ladungsträgers 4 auf einer höher gelegenen Lagerebene 3 kann der Senkrechtförderer 5 von dieser Lagerebene 3 einen zur Auslagerung bereitstehenden weiteren Ladungsträger 4 aufnehmen und zur Ein- und Auslager-Ebene 2 transportieren. Ein- und Auslagerungsbewegungen werden also falls möglich miteinander verbunden. Steht nach dem Beenden der Einlagerung kein auszulagernder Ladungsträger 4 bereit, so kann der Senkrechtförderer 5 auch eine Leerfahrt durchführen, anstatt längere Zeit auf der Lagerebene 3 auf einen auszulagernden Ladungsträger 4 zu warten.

Jeder Pufferplatz 7.1, 13.1, 13.2 wird hierbei von genau einem der vier Kettenförderer innerhalb der Kettenförderer-Anordnung 12.1 gebildet, wobei jeder Kettenförderer wiederum zwei Ketten 23 umfasst.

Ein in der Lagervorzone 21 verkehrendes FTS 11 liefert den Ladungsträger 4 an und übergibt diesen an die rechts in Figur 1 dargestellte Kettenförderer-Anordnung 12.1. Diese Übergabe erfolgt entlang der Richtung 18 und in der Darstellung von Figur 1 "nach oben". Die rechte Seite der Figur 1 zeigt die Situation unmittelbar nach der Übergabe des Ladungsträgers 4 von dem FTS 11 an die Kettenförderer-Anordnung 12.1, wobei sich der Ladungsträger 4 im ersten von insgesamt zwei weiteren Pufferplätzen 13.1 befindet.

Soll der Ladungsträger 4 in der Ein- und Auslager-Ebene 2 eingelagert werden, so wird er von der Kettenförderer-Anordnung 12.1 entlang der Richtung 18, welche zugleich die Längsrichtung der Kettenförderer-Anordnung 12.1 darstellt, bis zu dem wartenden Shuttle 6 transportiert, welches in Figur 1 rechts oben dargestellt ist. Erreicht der Ladungsträger 4 den Pufferplatz 7.1, indem er über den Vorzonen-seitigen Transferabschnitt 9 in diesen einfährt, so wird er anschliessend von der Kettenförderer-Anordnung 12.1, genauer von dem Kettenförderer, welcher den Pufferplatz 7.1 bildet, gegen das klappbare Zentriermittel 19.1 gedrückt und hierbei nötigenfalls zentriert, wobei beispielsweise eine etwaige Verdrehung des Ladungsträgers 4 korrigiert wird. Anschliessend klappt das Zentriermittel 19.1 weg und der Ladungsträger 4 wird auf den weiteren Pufferplatz 13.2 transportiert. Hierbei verlässt er den Pufferplatz 7.1 durch den lagerseitigen Transferabschnitt 8. Das Shuttle 6 fährt anschliessend in den Kettenförderer, welcher den weiteren Pufferplatz 13.2 (oben rechts in Figur 1) bildet, ein, und übernimmt den zuvor zentrierten Ladungsträger 4 von dem weiteren Pufferplatz 13.2.

Steht das in Figur 1 rechts oben dargestellte Shuttle 6 noch nicht bereit, so kann der Ladungsträger 4 auf dem weiteren Pufferplatz 13.2 auf das Shuttle 6 warten. Somit entkoppelt die Kettenförderer-Anordnung 12.1 die Aktionen und Aufträge des FTS 11 und des Shuttles 6, welche sich also zur Übergabe des Ladungsträgers 4 nicht gleichzeitig am selben Ort befinden müssen.

In diesem Zusammenhang sei darauf hingewiesen, dass die dargestellten einzelnen Kettenförderer, welche die Kettenförderer-Anordnung 12.1 bilden, vorzugsweise jeweils einen separaten Antrieb (nicht dargestellt) aufweisen. Die einzelnen Kettenförderer können also unabhängig voneinander angetrieben werden. Wartet auf dem weiteren Pufferplatz 13.2 ein Ladungsträger 4, so können die Kettenförderer, welche den vorgeschalteten Pufferplatz 7.1 und die ihm wiederum vorgeschalteten weiteren Pufferplätze 13.1 bilden, dennoch betrieben werden, und beispielsweise einen Ladungsträger 4 aus der Lagervorzone 21 zu dem Senkrechtförderer 5 transportieren.

Soll der Ladungsträger 4 in einer (in Figur 1 nicht gezeigten, aber beispielsweise in Figur 4 dargestellten) Lagerebene 3 eingelagert werden, welche sich beispielsweise oberhalb der Ein- und Auslager-Ebene 2 befindet, so muss der Ladungsträger 4 von dem Senkrechtförderer 5 dorthin transportiert werden. Nach der Übergabe des rechts in Figur 1 dargestellten Ladungsträgers 4 von dem FTS 11 auf die Kettenförderer-Anordnung 12.1 transportiert diese den Ladungsträger 4 hierfür auf den Pufferplatz 7.1. Die Zentrierung an dem Zentriermittel 19.1 sorgt dafür, dass die Zinken 16.1 der Teleskopgabel 16 den Ladungsträger 4 korrekt aufnehmen können. Handelt es sich bei dem Ladungsträger 4 um eine Palette, so sorgt die Zentrierung dafür, dass die Zinken 16.1 in die Taschen der Palette einfahren können. Die Zinken 16.1 der Teleskopgabel 16 des Senkrechtförderers 5 nehmen den Ladungsträger 4 also auf und befördern diesen auf den Senkrechtförderer 5. Befindet sich der Ladungsträger 4 auf dem Senkrechtförderer 5, so wird er von diesem vertikal in eine höher liegende Lagerebene 3 transportiert.

Der in Figur 1 gezeigte Senkrechtförderer 5 hat soeben einen Ladungsträger 4 auf der links in Figur 1 gezeigten Kettenförderer-Anordnung 12.1 abgestellt und wäre somit noch nicht bereit, einen von rechts kommenden einzulagernden Ladungsträger 4 in Empfang zu nehmen. Befände sich auf der rechts in Figur 1 dargestellten Kettenförderer-Anordnung 12.1 im Pufferplatz 7.1 ein Ladungsträger 4, so müssten die Zinken 16.1 der Teleskopgabel 16 ausgehend von der in Figur 1 dargestellten Lage nach rechts ausfahren, um diesen Ladungsträger 4 vom Pufferplatz 7.1 über den Senkrechtförderer-seitigen Transferabschnitt 10 aufzunehmen. Diese Aufnahme des Ladungsträges 4 bzw. Übergabe des Ladungsträgers 4 von dem Pufferplatz 7.1 an den Senkrechtförderer 5 erfolgt entlang einer Richtung 17.

Hat der Senkrechtförderer 5, wie in Figur 1 dargestellt und vorstehend ausführlich beschrieben, einen vorigen Auftrag noch nicht vollständig beendet, so kann der Ladungsträger 4 auf dem Pufferplatz 7.1 auf den Senkrechtförderer 5 warten. Der Pufferplatz 7.1 entkoppelt somit die Aktionen und Aufträge des FTS 11 von denjenigen des Senkrechtförderers 5. Für die Übergabe des Ladungsträgers 4 von dem FTS 11 auf den Senkrechtförderer 5 müssen sich diese nicht gleichzeitig am selben Ort befinden. Insbesondere müssen sich das FTS 11 und der Senkrechtförderer 5 nicht gleichzeitig in oder an der Ein- und Auslager-Ebene 2 befinden.

Das anschliessende Einlagern auf der Lagerebene 3 wird weiter unten in Bezug auf die Figuren 4 bis 6 beschrieben.

Während die rechts in Figur 1 dargestellte Kettenförderer-Anordnung 12.1 ausschliesslich zum Einlagern verwendet wird, dient die links in Figur 1 gezeigte Kettenförderer-Anordnung 12.1 ausschliesslich dem Auslagern. Weil davon ausgegangen werden kann, dass das Shuttle 6 den Ladungsträger 4 nur dann erfolgreich transportieren und zu dem links in Figur 1 gezeigten weiteren Pufferplatz 13.2 befördern kann, wenn der Ladungsträger 4 korrekt, d.h. zentriert auf dem Shuttle 6 abgestellt wurde, benötigt die links in Figur 1 gezeigte Kettenförderer-Anordnung 12.1 nicht zwingend ein Zentriermittel 19. Üblicherweise sind sowohl die in der Lagervorzone 21 angeordneten Fördermittel 11, 12.2, als auch die Kettenförderer-Anordnung 12.1 im Regalbau toleranter gegenüber Fehlpositionierungen des Ladungsträgers 4 auf ihrer jeweiligen Oberseite als das Shuttle 6.

Soll ein aus einer (in Figur 1 nicht gezeigten) Lagerebene 3 kommender Ladungsträger 4 ausgelagert werden, so wird dieser vom Senkrechtförderer 5 in die Ein- und Auslager-Ebene 2 transportiert und über den (in Figur 1 links der Übersicht halber nicht eingezeichneten) Senkrechtförderer-seitigen Transferabschnitt 10 an die Kettenförderer-Anordnung 12.1, konkret an den links gezeigten Pufferplatz 7.1 übergeben. Diese Situation unmittelbar nach einer solchen Übergabe eines Ladungsträgers 4 ist in Figur 1 dargestellt. Anschliessend befördert die Kettenförderer-Anordnung 12.1 den Ladungsträger 4 entlang der Richtung 18 zur Lagervorzone 21. Der Ladungsträger 4 verlässt hierfür den links dargestellten Pufferplatz 7.1 über den (der besseren Übersicht halber links in Figur 1 nicht eingezeichneten) Vorzonen-seitigen Transferabschnitt 9.

Indem die Kettenförderer-Anordnung 12.1 den Ladungsträger 4 unmittelbar in Richtung Lagervorzone 21 weitertransportiert, belegt der Ladungsträger 4 den Pufferplatz 7.1 nicht, und dieser steht für weitere Ladungsträger 4 zur Verfügung. Selbst wenn ein FTS 11, welches den Ladungsträger 4 übernehmen soll, noch nicht zur Verfügung steht, so sorgen die weiteren Pufferplätze 13.1 dafür, dass keine Stau-Situation auftritt. Der Senkrechtförderer 5 wird somit beim Auslagern hinsichtlich seiner Aktionen und Aufträge von etwaigen Aktionen und Aufträgen des FTS 11, welches den auszulagernden Ladungsträger 4 übernehmen soll, entkoppelt.

Soll ein aus der Ein- und Auslager-Ebene 2 kommender Ladungsträger 4 ausgelagert werden, so wird dieser vom Shuttle 6 zu dem links in Figur 1 gezeigten weiteren Pufferplatz 13.2 transportiert, indem das Shuttle 6 in den Kettenförderer-Anordnung 12.1 einfährt, um den Ladungsträger 4 auf dem weiteren Pufferplatz 13.2 abstellen zu können. Nach dem Abstellen befindet sich der Ladungsträger 4 auf der Kettenförderer-Anordnung 12.1. Anschliessend wird der Ladungsträger 4 über den (in Figur 1 links der Übersicht halber nicht eingezeichneten) lagerseitigen Transferabschnitt 8 an den Pufferplatz 7.1 übergeben. Diese Übergabe, also das Einfahren des Shuttles 6, erfolgt entlang der Richtung 18, ebenso wie der anschliessende Transport des Ladungsträgers 4 auf der Kettenförderer-Anordnung 12.1 zur Lagervorzone 21. Vom letzten weiteren Pufferplatz 13.1 vor der Lagervorzone 21, welcher in Figur 1 links unten eingezeichnet ist, wird der Ladungsträger 4 dann an das FTS 11 übergeben.

Falls der Senkrechtförderer 5 und das Shuttle 6 ungefähr zeitgleich jeweils einen Ladungsträger 4 an die links in Figur 1 gezeigten Kettenförderer-Anordnung 12.1 übergeben, könnte es zu Stau-Situationen kommen, in welchen die Pufferkapazität der Pufferplätze 13.2, 13.1, 7.1 vorteilhaft ist: Falls beispielsweise ein von dem Senkrechtförderer 5 in die Ein- und Auslager-Ebene 2 beförderter Ladungsträger 4 zeitlich vor dem Ladungsträger 4, welcher von dem in der Ein- und Auslager-Ebene 2 verkehrenden Shuttle 6 an ein in der Lagervorzone 21 wartendes FTS 11 übergeben werden soll, so kann der vom Shuttle 6 angelieferte Ladungsträger 4 auf dem Pufferplatz 13.2 warten, bis der Senkrechtförderer 5 den vorher auszulagernden Ladungsträger 4 auf dem Pufferplatz 7.1 abstellt. Anschliessend transportiert die Kettenförderer-Anordnung 12.1 beide Ladungsträger 4 zur Lagervorzone 21, wo diese in korrekter Reihenfolge an entsprechende FTS 11 übergeben werden.

Weiterhin kann der Fall eintreten, dass ein aus einer (in Figur 1 nicht gezeigten) Lagerebene 3 kommender Ladungsträger 4 in die Ein- und Auslager-Ebene 2 umgelagert werden soll, beispielsweise, um diesen Ladungsträger 4 zu einem späteren Zeitpunkt ohne Benutzung des Senkrechtförderers 5 auslagern zu können. Bis der Ladungsträger 4 den Senkrechtförderer 5 erreicht, gleicht das Umlagern dem vorstehend bereits beschriebenen Auslagern. Anschliessend übergibt der Senkrechtförderer 5 den Ladungsträger 4 an den rechts in Figur 2 gezeigten Pufferplatz 7.1. Von dort aus wird der Ladungsträger 4 in derselben Weise in die Ein- und Auslager-Ebene 2 eingelagert, wie dies bereits für das Einlagern beschrieben wurde.

Figur 2 zeigt ausschnittsweise ein Shuttle-System, bei welchem die Senkrechtförderer 5 Einzelspiele durchführen. Der in Figur 2 dargestellte Ausschnitt dient der Auslagerung von Ladungsträgern 4. Daneben umfasst dieses nur teilweise dargestellte System vorzugsweise noch eine ähnlich gebaute, aber nicht dargestellte Anordnung in der Ein- und Auslager-Ebene 2, welche genau eine Kettenförderer-Anordnung 12.1, ein Zentriermittel 19.1 und genau einen Senkrechtförderer 5 umfasst, aber der Einlagerung dient.

Im Übrigen verläuft das Auslagern eines Ladungsträgers 4 bei der in Figur 2 dargestellten Variante so, wie dies bereits in Bezug auf die linke Seite der Figur 1 beschrieben wurde. Der wesentliche Unterschied besteht darin, dass der Senkrechtförderer 5 der Figur 2 nach der Übergabe eines Ladungsträgers 4 an den Pufferplatz 7.1 eine Leerfahrt durchführt, um wieder in die Lagerebene 3 zu gelangen. Vorteilhaft an der in Figur 2 gezeigten Variante ist die grössere Robustheit und der einfache Aufbau. Ferner sind bei einem Fehler oder einer Störung des Senkrechtförderers 5 entweder das Ein- oder das Auslagern, aber nicht beide Prozesse betroffen.

Figur 3 zeigt ausschnittsweise ein Shuttle-System, welches sich deutlicher von denjenigen gemäss den Figuren 1 und 2 unterscheidet. In der Lagervorzone 21 verkehrt kein FTS 11, stattdessen ist dort ein Kettenförderer 12.2 angeordnet, welcher Ladungsträger 4 an die Kettenförderer-Anordnung 12.1 in der Ein- und Auslager-Ebene 2 übergeben kann. Ferner umfasst die Kettenförderer-Anordnung 12.1 eine starre Sperre 19.2 als Zentriermittel. Shuttles 6 können somit nicht in den Pufferplatz 7.2 einfahren, welcher somit keinen lagerseitigen Transferabschnitt 8 umfasst. Gegenüber des Pufferplatzes 7.2 ist ein passiver Pufferplatz 7.3 angeordnet, welcher von zwei Abstell-Schienen 20 gebildet wird. Die vorgenannten Pufferplätze 7.2, 7.3 erlauben in Kombination sämtliche Aktionen, welche in Bezug auf die Pufferplätze 7.1 der Figuren 1 und 2 bereits beschrieben wurden.

Die in Figur 3 dargestellte Anordnung dient dem Einlagern eines Ladungsträgers 4. Dieser (in Figur 3 nicht gezeigte) Ladungsträger 4 wird von dem Kettenförderer 12.2 in der Lagervorzone 21 an die Kettenförderer-Anordnung 12.1 in der Ein- und Auslager-Ebene 2 entlang der Richtung 18 übergeben. Wartet auf dem Pufferplatz 7.2 noch ein einzulagernder Ladungsträger 4 auf den Senkrechtförderer 5, so kann der neu hinzukommende Ladungsträger 4 auf dem weiteren Pufferplatz 13.1 warten, bis der Pufferplatz 7.2 frei geworden ist. Die Kettenförderer-Anordnung 12.1 transportiert den Ladungsträger 4 anschliessend zu dem Pufferplatz 7.2, in welchen der Ladungsträger über den Vorzonen-seitigen Transferabschnitt 9 einfährt. Die Kettenförderer-Anordnung 12.1 fährt den Ladungsträger 4 hierbei gegen das Zentriermittel 19.2, um den Ladungsträger 4 nötigenfalls zu zentrieren, damit die Zinken 16.1 der Teleskopgabel 16 diesen übernehmen können. Die Teleskopgabel 16 übernimmt den Ladungsträger 4 über den Senkrechtförderer-seitigen Transferabschnitt 10 des Pufferplatzes 7.2.

Soll der Ladungsträger 4 in der Ein- und Auslager-Ebene 2 eingelagert werden, so übergibt die Teleskopgabel 16 den Ladungsträger unmittelbar an den gegenüberliegenden Pufferplatz 7.3. Diese Bewegung erfolgt entlang der Richtung 17. Nachdem der Ladungsträger 4 auf den Abstell-Schienen 20 des Pufferplatzes 7.3 abgestellt wurde, kann ein Shuttle 6 über den lagerseitigen Transferabschnitt 8 entlang der Richtung 18 in den Pufferplatz 7.3 einfahren, um den Ladungsträger 4 aufzunehmen.

Soll der Ladungsträger 4 in einer Lagerebene 3 eingelagert werden, so übernimmt der Senkrechtförderer 5 mit Hilfe der Teleskopgabel 16 den Ladungsträger 4 und fährt anschliessend zur gewünschten Lagerebene 3.

Wie im Hinblick auf die Figur 2 bereits beschrieben, so führt auch der Senkrechtförderer 5 gemäss Figur 3 Einzelspiele durch.

Die dem Senkrechtförderer 5 in Figur 3 zugeordneten Pufferplätze 7.2, 7.3 ermöglichen dank der Transfer-Abschnitte 8, 9 10 und des Zentriermittels 19.2 sämtliche Aktionen, welche auch von den Pufferplätzen 7.1 der Figuren 1 und 2 ermöglicht werden. Die Anordnung nach Figur 3 umfasst sozusagen einen "aufgeteilten" Pufferplatz, welcher aus den beiden vorgenannten Pufferplätzen 7.2, 7.3 besteht.

Im Weiteren Sinne stellen alle Anordnungen gemäss den Figuren 1 bis 3 jeweils eine Drei-Wege-Kreuzung dar, welche die Übernahme und Übergabe eines Ladungsträgers 4 zwischen einem Fördermittel 11, 12.2 in der Lagervorzone 21, einem Shuttle 6 in der Ein- und Auslager-Ebene 2 und einem Shuttle 6 in einer Lagerebene 3 erlaubt. Hierbei erfolgen Übernahme und Übergabe zu und von dem Shuttle 6 in der Lagerebene 3 mit Hilfe des zwischengeschalteten Senkrechtförderers 5, welcher den vertikalen Transport des Ladungsträgers 4 übernimmt.

Anhang der Figuren 4 und 5 lässt sich ein Ein- und Auslagern von Ladungsträgern 4 auf einer der Lagerebenen 3 nachvollziehen. Die in Figur 4 gezeigte Lagerebene 3 ist Teil eines Shuttle-Systems, dessen Ein- und Auslager-Ebene 2 in Figur 1 dargestellt ist.

Zum Auslagern eines in der Lagerebene 3 eingelagerten Ladungsträgers 4 wird dieser von einem Shuttle 6 entlang der Richtung 18, in Figur 4 also von unten her kommend, zu dem rechts in Figur 4 dargestellten Übergabeplatz 14.2 befördert und dort abgestellt. Das Shuttle 6 fährt hierfür auf den Fahrschienen 22 in den Übergabeplatz 14.2 ein. Weil aus den zuvor schon erläuterten Gründen davon auszugehen ist, dass der Ladungsträger 4 auf dem Shuttle 6 korrekt positioniert, d.h. zentriert, aufliegt, sind die Zentriermittel 15.2 des Übergabeplatzes 14.2 nicht zwingend nötig, können aber dennoch vorteilhaft sein. Diese Zentriermittel 15.2 gleichen beispielsweise Positioniertoleranzen des Shuttles 6 aus. Das entlang der Richtung 18 verlaufende längliche Zentriermittel 15.2 kann die Position eines verdreht auf dem Shuttle 6 stehenden Ladungsträger 4 sowie einen entlang Richtung 17 nach rechts (in Figur 4) verschobenen Ladungsträger 4 zumindest teilweise zentrieren. Das entlang der Richtung 17 verlaufende Zentriermittel 15.2 kann als Anschlag dienen, wobei das Shuttle 6 den Ladungsträger 4 entlang der Richtung 18 gegen dieses entlang der Richtung 17 verlaufende Zentriermittel 15.2 drückt. Hierbei kann ebenfalls eine zumindest teilweise Zentrierung des Ladungsträgers 4 auf dem Shuttle 6 erfolgen, beispielsweise kann der Ladungsträger 4 entlang der Richtung 18 - in Figur 4 "nach unten" - auf dem Shuttle 6 verschoben werden. Das Shuttle 6 stellt den Ladungsträger 4 auf den Abstell-Schienen 20 ab und verlässt den Übergabeplatz 14.2 anschliessend wieder. Diese Situation ist rechts in Figur 5 dargestellt. Die Zentrierung stellt sicher, dass die Zinken 16.1 der Teleskopgabel 16 den Ladungsträger 4 korrekt aufnehmen können. Nachdem der Ladungsträger 4 sich auf dem Senkrechtförderer 5 befindet, transportiert dieser den Ladungsträger 4 auf die Ein- und Auslager-Ebene 2, wo er ausgelagert wird, was in Bezug auf die Figur 1 bereits beschrieben wurde.

Zum Einlagern eines in der Lagerebene 3 einzulagernden Ladungsträgers 4 wird dieser in der Ein- und Auslager-Ebene 2 von dem Senkrechtförderer 5 aufgenommen und in die Lagerebene 3 transportiert, wie dies in Bezug auf die Figur 1 bereits beschrieben wurde. Die Teleskopgabel 16 des in den Figuren 4 und 5 dargestellten Senkrechtförderers 5 übergibt den Ladungsträger 4 dann entlang der Richtung 17, in den Figuren 4 und 5 nach links, an den dort dargestellten Übergabeplatz 14.1. Dieser weist die schmalen Zentriermittel 15.1 und das längliche Zentriermittel 15.2 auf, welche sicherstellen, dass der Ladungsträger 4 vor der Aufnahme durch das Shuttle 6 korrekt zentriert auf den Abstell-Schienen 20 steht, und somit auch korrekt zentriert vom Shuttle 6 aufgenommen werden kann.

Das (in Figur 4 nicht gezeigte) Shuttle 6 fährt denn entlang der Richtung 18 und in der Darstellung nach Figur 4 "von unten" her kommend in den links dargestellten Übergabeplatz 14.1 ein, um den Ladungsträger 4 aufzunehmen. Anschliessend lagert das Shuttle 6 den Ladungsträger 4 in der Lagerebene 3 ein.

Aus Figur 6 geht hervor, wie eine Übergabe und Zentrierung des Ladungsträgers 4 auf dem links in Figur 4 dargestellten Übergabeplatz 14.1 erfolgen kann:
Die Zinken 16.1 der Teleskopgabel 16 übergeben einen von dem Senkrechtförderer 5 in die Lagerebene 3 transportierten Ladungsträger 4 an den Übergabeplatz 14.1. Hierbei werden die Zinken 16.1 der Teleskopgabel 16 in bekannter Weise abgesenkt, d.h. ein Stück weit vertikal nach unten bewegt, bis der Ladungsträger 4 auf den Abstell-Schienen 20 steht und die Zinken 16.1 nach rechts in Figur 4 zurückgezogen werden können. Bei diesem Absenken der Teleskopgabel 16 gleitet der Ladungsträger 4, sofern er nicht zentriert, d.h. nicht korrekt positioniert auf der Teleskopgabel 16 stand, an den Zentriermitteln 15.1, 15.2 entlang, wodurch er zentriert wird.

Zusätzlich oder alternativ kann das Zentrieren nicht nur während des Absenkens der Teleskopgabel 16, sondern auch bereits während der Bewegung in Richtung 17 erfolgen, nämlich wenn die Teleskopgabel 16 den nicht zentrierten Ladungsträger 4 gegen das Zentriermittel 15.2 drückt, wodurch etwaige Fehlpositionierungen wie eine Verdrehung des Ladungsträgers 4 oder eine Fehlpositionierung im Sinne eines "zu weit links" (in Figur 4) auf der Teleskopgabel 16 abgestellten Ladungsträgers 4 behoben werden.

Zusätzlich oder alternativ kann ein Zentrieren insbesondere an den Zentriermitteln 15.1 mit Hilfe des (in Figur 6 nicht gezeigten) Shuttles 6 erfolgen. Hierfür kann das Shuttle 6 den nicht korrekt auf den Abstell-Schienen 20 des Übergabeplatzes 14.1 positionierten Ladungsträger 4 unterfahren und mit Hilfe seiner bekannten Lastaufnahme-Mittel, also beispielsweise einer Hub-Einrichtung, anheben. Fährt das Shuttle 6 anschliessend ein Stück weit entlang der Richtung 18, so kann es den Ladungsträger 4 relativ zu den Zentriermitteln 15.1 so positionieren, dass er beim Absenken durch die Lastaufnahme-Mittel des Shuttles 6 an den Zentriermitteln 15.1 entlanggleitet und zentriert wird. Diese durch das Shuttle 6 bewirkte Zentrierung kann Sensor-gesteuert erfolgen, beispielsweise können als Bordmittel im Shuttle 6 vorhandene Sensoren eingesetzt werden. Es kann auch daran gedacht sein, dass das Shuttle 6 den vorbeschriebenen Vorgang mehrfach hintereinander durchführt, und sich hierbei nach jedem Anheben des Ladungsträgers 4 ein Stück weit entlang Richtung 18 zu den Zentriermitteln 15.1 hin oder von diesen weg bewegt. Dadurch kann sichergestellt werden, dass während der vorbeschriebenen Sequenz der Ladungsträger 4 zumindest einmal relativ zu den Zentriermitteln 15.1 so positioniert wird, dass eine erfolgreiche Zentrierung erfolgen kann.

Hierbei ist es vorteilhaft, dass die lichte Weite zwischen den Zentriermitteln 15.1 mindestens so gross ist, wie die in Richtung 17 gemessene lichte Weite zwischen den Abstell-Schienen 20.

Wären die Zentriermittel 15.1 entlang der Richtung 17 durchgehend ausgebildet, also ähnlich dem länglichen Zentriermittel 15.2 in Bezug auf die Richtung 18, oder würden die Zentriermittel 15.1 zumindest weit in einen Zwischenraum zwischen den Abstell-Schienen 20 hineinragen, so könnte das Shuttle 6 mit angehobenem Ladungsträger 4 und somit ausgefahrenem Lastaufnahmemittel nicht beliebig weit entlang Richtung 18 auf die Zentriermittel 15.1 zu fahren. Bei einem durchgehenden oder in den Zwischenraum hinein ragenden Zentriermittel 15.1 würden die Lastaufnahmemittel des Shuttles 6 nämlich sonst mit dem Zentriermittel 15.1 kollidieren, so dass eine Einfahr-Weite entlang der Richtung 18 durch diese drohende Kollision begrenzt wäre. Abhängig von den Abmessungen des Ladungsträger 4 könnte dann der Fall eintreten, dass ein Zentrieren an den Zentriermitteln 15.1 durch Absenken des Lastaufnahmemittels nicht möglich wäre, weil das Shuttle 6 wegen der drohenden Kollision nicht weit genug in den Übergabeplatz 14.1 einfahren kann. Wenn nach Erreichen der maximalen Einfahr-Weite, welche durch die vorbeschriebene drohende Kollision bestimmt ist, der Ladungsträger 4 und das zumindest in den Zwischenraum hineinragende Zentriermittel 15.1 so zueinander orientiert sind, dass beim Absenken des Lastaufnahmemittels ein Entlanggleiten am Zentriermittel 15.1 nicht möglich ist, weil das Shuttle 6 sozusagen nicht weit genug in den Übergabeplatz 14.1 einfahren kann, ist ein Zentrieren nicht möglich.

Die in Figur 6 gezeigte Anordnung der beiden schmalen Zentriermittel 15.1 auf den Abstell-Schienen 20 stellt sicher, dass das vorbeschriebene Problem nicht auftritt.

**Obwohl nur einige bevorzugte Ausführungsbeispiele der Erfindung beschrieben und dargestellt wurden, ist es offensichtlich, dass der Fachmann zahlreiche Modifikationen hinzufügen kann, ohne Wesen und Umfang der Erfindung zu verlassen. Insbesondere kann an die nachfolgend beschriebenen Modifikationen gedacht sein. Die Bezugsziffern der Modifikationen beziehen sich auf die Bezugsziffern der** **Figuren 1 bis 6****, wobei die nachstehend beschriebenen Modifikationen in den Figuren zumeist nicht dargestellt sind.**

Der Regalbau 1 ist nur in den Figuren 4 bis 6 angedeutet. Natürlich umfassen sämtliche Ausführungsformen des Shuttle-Systems mit Regal-Ebenen 2, 3 einen Regalbau 1, welcher unter anderem diese Regal-Ebenen 2, 3 bildet.

Die Ein- und Auslager-Ebene 2 ist vorzugsweise die unterste Ebene des Regalbaus 1, darüber befinden sich vorzugsweise die Lagerebenen 3. Üblicherweise existieren mehrere Lagerebenen 3 aber nur eine einzige Ein-und Auslager-Ebene 2. In seltenen Ausführungsbeispielen kann an Shuttle-Systeme mit mehreren Ein- und Auslager-Ebenen 2 gedacht sein. Ausserdem kann daran gedacht sein, dass auch unterhalb der Ein- und Auslager-Ebene 2, üblicherweise als unterhalb des Grund- bzw. Boden-Niveaus, eine weitere Lagerebene 3 angeordnet ist.

Sowohl die Lagervorzone 21 als auch die Ein- und Auslager-Ebene 2 sind üblicherweise deutlich grösser, als in den Figuren gezeigt. In der Lagervorzone 21 können eine Vielzahl von FTS 11 und/oder eine Vielzahl von Kettenförderern 12.2 verkehren bzw. angeordnet sein. Dasselbe gilt für die Shuttles 6 in der Ein- und Auslager-Ebene 2 und in den Lagerebenen 3, aber auch für die Kettenförderer-Anordnungen 12.1 und die Senkrechtförderer 5.

Die Shuttles 6 können sich üblicherweise horizontal, d.h. in Richtung 18 und in Richtung 17 bewegen. Es kann aber auch an Shuttles 6 gedacht sein, welche sich beispielsweise ausschliesslich in Richtung 18 bewegen können.

Da die Shuttles 6 üblicherweise nicht die Regal-Ebenen 2, 3 wechseln können, befindet sich auf jeder Ebene 2, 3 zumindest ein Shuttle 6. Alternativen sind denkbar.

Die Senkrechtförderer 5 können sämtliche Regal-Ebenen 2, 3 des Shuttle-Systems miteinander verbinden. Es kann alternativ auch daran gedacht sein, mehrere Senkrechtförderer 5 einzusetzen, wobei jeder Senkrechtförderer 5 nur einen Teil der Regal-Ebenen 2, 3 bedient bzw. miteinander verbindet, wobei natürlich vorzugsweise stets die Ein- und Auslager-Ebene 2 umfasst ist.

Vorzugsweise existieren die Transferabschnitte 8, 9, 10 nicht als physisch abgegrenzte Einheiten, sondern bezeichnen nur Abschnitte innerhalb der Pufferplätze 7.1, 7.2, 7.3, wobei der Transfer des Ladungsträgers 4 in den Pufferplatz 7.1, 7.2, 7.3 hinein oder aus diesem heraus durch oder entlang der Transfer-Abschnitte 8, 9, 10 stattfindet.

Wie in Bezug auf die Figuren 1 und 2 erläutert wurde, erfolgt die Übergabe des Ladungsträgers 4 von dem Shuttle 6 an den Pufferplatz 7.1 über den weiteren Pufferplatz 13.2, also indirekt. Es kann auch an Ausführungsformen gedacht sein, welche keinen weiteren Pufferplatz 13.2 aufweisen. Bei einer solchen Ausführungsform kann das Shuttle 6 unmittelbar über den lagerseitigen Transfer-Abschnitt 8 in den Pufferplatz 7.1 einfahren, um den Ladungsträger 4 an den Pufferplatz 7.1 zu übergeben bzw. auf diesem abzustellen. Analoges gilt für die Übernahme eines Ladungsträgers 4 durch das Shuttle 6 von dem Pufferplatz 7.1 in umgekehrter Richtung, wenn also keine weiteren Pufferplätze 13.1 vorhanden sind.

Die gezeigten Fördermittel in der Lagervorzone 21, also der Kettenförderer 12.2 und das FTS 11, können sich im Wesentlichen ausserhalb des Regalbaus 1 und somit ausserhalb der von diesem Regalbau 1 gebildeten Ein- und Auslager-Ebene 2 befinden. Hierbei meint "im Wesentlichen", dass beispielsweise auch daran gedacht sein kann, dass das FTS 11 ein Stück weit in die Ein- und Auslager-Ebene 2 hineinfährt, oder dass der Kettenförderer 12.2 so gebaut ist, dass ein Abschnitt dieses Kettenförderers 12.2 in die Ein- und Auslager-Ebene 2 hineinragt. Ein solcher Kettenförderer 12.2 kann sich auch vollständig innerhalb des Regalbaus 1, beispielsweise innerhalb der Ein- und Auslager-Ebene 2 befinden. Hierbei kann daran gedacht sein, dass der Kettenförderer 12.2 gemeinsam mit einem weiteren Fördermittel als Schnittstelle fungiert.

Es kann auch daran gedacht sein, dass sich der Kettenförderer 12.2 oder ein alternativer Stetigförderer nicht vollständig oder im Wesentlichen, sondern nur zumindest teilweise ausserhalb des Regalbaus 1 befindet. Der Kettenförderer 12.2 oder der alternative Stetigförderer kann sich also zu grossen Teilen innerhalb des Regalbaus 1 befinden, beispielsweise können Abschnitte des Regalbaus 1 den Kettenförderer 12.2 umgeben, um möglichst viel Lagerplatz zu schaffen. Auch ein nur teilweise ausserhalb des Regalbaus 1 befindlicher Kettenförderer 12.2 oder dergleichen kann als Schnittstelle zur Lagervorzone 21 fungieren.

Alternativ zu dem FTS 11 und dem Kettenförderer 12.2 können andere Fördermittel angedacht sein. Der Kettenförderer 12.2 und das FTS 11 in der Lagervorzone 21 können in sämtlichen Ausführungsbeispielen alternativ sein. Alternativ zu einem Kettenförderer 12.2 können auch andere Stetigförderer eingesetzt werden. Es kann auch an Lagervorzonen 21 gedacht sein, welche sowohl FTS 11 als auch Kettenförderer 12.2 und/oder weitere alternative Fördermittel umfassen.

Alternativ zu der in den Figuren 1 bis 3 gezeigten Situation kann daran gedacht sein, dass das Fördermittel 11, 12.2 den Ladungsträger 4 unmittelbar an den Pufferplatz 7.1, 7.2 übergibt. In einer solchen Ausführungsform kann also auf die weiteren Pufferplätze 13.1 zwischen dem Fördermittel 11, 12.2 und dem Pufferplatz 7.1, 7.2 verzichtet werden, was weiter oben bereits angedeutet wurde. Anstelle der in den Figuren gezeigten indirekten Übergabe des Ladungsträgers 4 von dem Fördermittel 11, 12.2 an den Pufferplatz 7.1 über die zwischengeschalteten weiteren Pufferplätze 13.1 kann also auch an eine direkte Übergabe des Ladungsträgers 4 gedacht sein. Analoge Überlegungen gelten für die Auslagerung eines Ladungsträgers 4, also für dessen Übergabe von dem Pufferplatz 7.1 an das Fördermittel 11, 12.2.

Anstatt der Teleskopgabel 16 kann an alternative Mittel gedacht sein, welche den Ladungsträger 4 aktiv von dem Pufferplatz 7.1, 7.2, 7.3 übernehmen und an diesen übergeben können. Beispielsweise kann an einen Eckumsetzer gedacht sein, welcher beispielsweise zwei parallel verlaufende Riemen, Ketten oder dergleichen umfasst, um den Ladungsträger 4 orthogonal zu einer in Richtung 18 verlaufenden Längsrichtung des Kettenförderers 12.1, d.h. entlang bzw. parallel zur Richtung 17 zu bewegen. Der Senkrechtförderer 5 kann ein solches alternatives Mittel umfassen, es kann ihm jedoch auch nur zugeordnet, aber nicht beispielsweise in den Senkrechtförderer 5 integriert sein. Insbesondere kann ein solches alternatives Mittel ein Eckumsetzer sein, welcher sich auf dem Pufferplatz befindet oder diesen bildet.

Üblicherweise sind die weiteren Pufferplätze 13.1 zwischen dem Senkrechtförderer 5 bzw. dem Pufferplatz 7.1, 7.2 und der Lagervorzone 21 wichtiger als die weiteren Pufferplätze 13.2 oberhalb des Pufferplatzes 7.1, 7.2. Der Grund hierfür ist, dass das Shuttle-System üblicherweise nur eine Ein- und Auslager-Ebene 2 mit einer begrenzten Anzahl an Lagerplätzen umfasst, aber deutlich mehr Lagerebenen 3 mit deutlich mehr Lagerplätzen. Die Mehrzahl der einzulagernden Ladungsträger 4 wird also über den Senkrechtförderer 5 in die Lagerebenen 3 verbracht; entsprechend wird die Mehrzahl der auszulagernden Ladungsträger 4 von den Lagerebenen 3, und nicht etwa von den Lagerplätzen der Ein- und Auslager-Ebene 2, zu dem Pufferplatz 7.1, 7.2 befördert. Daher werden die weiteren Pufferplätzen 13.1 üblicherweise häufiger gebraucht also der weitere Pufferplatz 13.2 Aus demselben Grund genügt es in der Regel, einen einzigen weiteren Pufferplatz 13.2 vorzusehen, während, wie gezeigt, zwei weitere Pufferplätze 13.1 vorgesehen sind. Es kann aber auch daran gedacht sein, aus den genannten Gründen mehr als zwei weitere Pufferplätze 13.1 vorzusehen.

Zwar kann auch daran gedacht sein, mehr als zwei weitere Pufferplätze 13.2 vorzusehen, dies dürfte aber nur dann zum Tragen kommen, wenn entweder viele Lagerplätze in der Ein- und Auslager-Ebene 2 vorhanden sind, oder Ein-und Auslager-Vorgänge von Ladungsträgern 4 in oder aus der Ein- und Auslager-Ebene 2 sehr häufig durchgeführt werden. Weiterhin können zwei oder mehr weitere Pufferplätze 13.2 sinnvoll sein, wenn in der Ein- und Auslager-Ebene 2 nur wenige Shuttles 6 im Einsatz sind, oder die Fahrtwege zwischen den weiteren Pufferplätzen 13.2 in der Ein- und Auslager-Ebene 2 und den in dieser Ebene befindlichen Lagerplätzen sehr weit sind, so dass vor der Rückkehr des Shuttles 6 zu dem weiteren Lagerplatz 13.2 bereits mehrere weitere Ladungsträger 4 zum Einlagern in der Ein- und Auslager-Ebene 2 bereitstehen.

Alternativ zu der in der Ein- und Auslager-Ebene 2 angeordneten Kettenförderer-Anordnung 12.1 kann an eine Rollenbahn oder einen anderen Stetigförderer gedacht sein.

Die Kettenförderer-Anordnung 12.1 und der Kettenförderer 12.2 in Figur 3 können unmittelbar aneinander angrenzen, um einen Ladungsträger 4 nahtlos von der Lagervorzone 21 in die Ein- und Auslager-Ebene 2 hinein und aus dieser heraus fördern zu können.

Das in Figur 3 nur teilweise dargestellte Shuttle-System kann noch eine Anordnung, welche analog derjenigen nach Figur 3 ausgebildet ist, aber der Auslagerung dient, umfassen. Alternativ kann daran gedacht sein, dass die in Figur 3 gezeigte Anordnung dem Ein- und Auslagern dient, was aber weniger bevorzugt ist.

Sowohl die Shuttles 6 als auch die FTS 11 umfassen vorzugsweise nicht näher dargestellte Lastaufnahmemittel, beispielsweise eine Hub-Einrichtung, welche den Ladungsträger 4, beispielsweise eine Palette, auf der Oberseite des Shuttles 6 und des FTS 11 anheben und absenken können. Dies wurde bereits im Hinblick auf die Zentrierung und mit Bezug auf Figur 6 noch näher beschrieben.

Sämtliche Ausführungsformen des Shuttle-Systems können mehrere Senkrechtförderer 5 in Reihe, d.h. unmittelbar benachbart zueinander, umfassen. Ausgehend von Figur 1 könnte beispielsweise daran gedacht sein, unmittelbar neben den gezeigten Senkrechtförderer 5 einen weiteren Senkrechtförderer 5 zu platzieren. Dieser zusätzliche Senkrechtförderer 5 könnte beispielsweise ausgehend vom gezeigten Senkrechtförderer 5 in Richtung 18 "nach oben" in Figur 1 versetzt sein. Entsprechend können auf beiden Kettenförderer-Anordnungen 12.1 jeweils zwei Pufferplätze 7.1 vorgesehen sein, welche unmittelbar zu den zwei Senkrechtförderern 5 benachbart angeordnet sind. Diese zusätzlichen Pufferplätze 7.1, welche ebenso wie die in Figur 1 gezeigten Pufferplätze 7.1 als Übergabeplätze für die Senkrechtförderer 5 in der Ein- und Auslager-Ebene 2 fungieren, können zwischen dem in Figur 1 gezeigten Pufferplatz 7.1 und dem weiteren Pufferplatz 13.2 angeordnet sein. Diejenigen hintereinander angeordneten Pufferplätze 7.1, welche von der für die Einlagerung zuständigen Kettenförderer-Anordnung 12.1 gebildet werden, können jeweils ein klappbares Zentriermittel 19.1 umfassen. Vorzugsweise umfasst zumindest der der Lagervorzone 21 näherstehende Pufferplatz 7.1 ein solches klappbares Zentriermittel 19.1.

Der weitere Pufferplatz 13.2 in Figur 1 rechts oben kann weitere Zentriermittel umfassen, um den Ladungsträger 4 sehr genau zu zentrieren, bevor er an das Shuttle 6 übergeben wird. Hierbei kann auch an parallel zu den Ketten 23 verlaufende Zentriermittel gedacht sein.

Obwohl die Lagerebene 3 gemäss Figur 4 nur in Bezug zu der Ausführungsvariante der Ein- und Auslager-Ebene 2 gemäss Figur 1 beschrieben wurde, so umfassen natürlich auch die in den Figuren 2 und 3 ausschnittsweise gezeigten Shuttle-Systeme Lagerebenen 3. Unabhängig davon, ob die Senkrechtförderer 5 Einzel- oder Doppelspiele bewerkstelligen, kann daran gedacht sein, in den Shuttle-Systemen gemäss den Figuren 2 und 3 Lagerebenen 3 mit jeweils zwei Übergabeplätzen 14, wie sie in den Figuren 4 und 5 gezeigt sind, einzusetzen. Dem Senkrechtförderer 5 gemäss Figur 2, welcher im Einzelspiel-Betrieb für das Auslagern zuständig ist, können in den Lagerebenen 3 beispielsweise jeweils zwei Übergabeplätze 14.2 zugeordnet sein, die ausgestaltet sind, wie der rechts in Figur 4 gezeigte Übergabeplatz 14.2. Dem Senkrechtförderer 5 gemäss Figur 3, welcher im Einzelspiel-Betrieb für das Einlagern zuständig ist, können in den Lagerebenen 3 beispielsweise jeweils zwei Übergabeplätze 14.1 zugeordnet sein, die ausgestaltet sind, wie der links in Figur 4 gezeigte Übergabeplatz 14.1, welcher drei Zentriermittel 15.1, 15.2 umfasst.

Vorteilhaft an Shuttle-Systemen, bei denen Senkrechtförderer 5 im Einzelspiel-Betrieb eingesetzt werden, wobei in den Lagerebenen 3 jeweils zwei Übergabeplätze 14.1 neben dem Senkrechtförderer 5 vorhanden sind, ist, dass ein auf einem der Übergabeplätze 14.1 abgestellter Ladungsträger 4 notfalls auf ein Shuttle 6 warten kann, wenn sich dieses beispielsweise störungsbedingt verspätet. Eine solche störungsbedingte Verspätung führt aber nicht zu einem Stau, wenn in derselben Lagerebene 3 ein weiterer Ladungsträger 4 eingelagert werden soll, weil der Senkrechtförderer 5 diesen auf dem zweiten Übergabeplatz 14.1 in der Lagerebene 3 abstellen kann. Entsprechendes gilt für zwei Übergabeplätze 14.2 auf den Lagerebenen 3 neben dem Senkrechtförderer 5, auf denen Shuttles 6 zwei auszulagernde Ladungsträger 4 neben den zuständigen Senkrechtförderer 5 stellen können. Dies kann beispielsweise relevant sein, wenn die Shuttles 6 die auszulagernden Ladungsträger 4 schneller anliefern, als diese vom Senkrechtförderer 5 in die Ein- und Auslager-Ebene 2 transportiert werden können.

Alternativ kann für Senkrechtförderer 5, welche im Einzelspiel-Betrieb eingesetzt werden, in den Lagerebenen 3 jeweils nur ein einziger Übergabeplatz 14 vorgesehen sein.

Üblicherweise kann sich die Teleskopgabel 16 entlang der Richtung 17 bewegen, um einen Ladungsträger 4 zu befördern. Ferner kann sich die Teleskopgabel 16 üblicherweise vertikal bewegen, um einen Ladungsträger 4 aufzunehmen und abzusetzen. Diese Vertikalbewegung kann durch eine Vertikalbewegung des Senkrechtförderers 5 oder durch eine Vertikalbewegung der Teleskopgabel relativ zum Senkrechtförderer 5 erfolgen.

Die weiteren Pufferplätze 13.2 können, wie oben bereits angedeutet, auf einer oder beiden Seiten im Wesentlichen parallel zu den zweispurigen Kettenförderern der Kettenförderer-Anordnung 12.1 verlaufende Zentriermittel 15.2 umfassen, die den Zentriermitteln 15.2 gemäss Figur 6 ähneln. Vorzugsweise kann ein Abstand zwischen diesen Zentriermitteln 15.2 der weiteren Pufferplätze 13.2, also deren in Richtung 17 gemessene lichte Weite, sich "nach oben hin" in Figur 1 verkleinern. In diesem Fall verlaufen die Zentriermittel 15.2 nicht vollständig parallel zu den Ketten 23. Dadurch kenn ein beispielsweise verdreht auf der zweispurigen Kettenförderer-Anordnung 12.1 abgestellter Ladungsträger 4 oder ein zu weit links oder rechts entlang der Richtung 17 auf der Kettenförderer-Anordnung 12.1 abgestellter Ladungsträger 4 während der Einfahrt in den Pufferplatz 13.2 zentriert werden, indem er an den zunehmend enger werdenden Zentriermitteln 15.2 entlanggleitet.

Der Pufferplatz 7.3 in der Ein- und Auslager-Ebene 2 kann ausgestaltet sein, wie dies für den Übergabeplatz 14.1 im Hinblick auf Figur 6 beschrieben wurde, insbesondere können die Zentriermittel 15.1, 15.2 vorhanden sein. Dies kann in beiden Fällen dazu dienen, den Ladungsträger 4 zu zentrieren, bevor er durch das hinsichtlich Fehlpositionierungen empfindliche Shuttle 6 aufgenommen wird. Zusätzlich oder alternativ kann auch das Shuttle 6 durch mehrmaliges Anheben und Absetzen des Ladungsträgers 4 diesen zentrieren, wie zuvor mit Hinblick auf Figur 6 bereits beschrieben.

Soll ein Ladungsträger 4 von beispielsweise dem FTS 11 über die Kettenförderer-Anordnung 12.1 an das Shuttle 6 in der Ein- und Auslager-Ebene 2 übergeben werden, und umfasst diese Kettenförderer-Anordnung 12.1 keinen weiteren Pufferplatz 13.2, so kann der Ladungsträger 4 nötigenfalls auch auf dem Pufferplatz 7.1 auf das Shuttle 6 warten.

Zwischen der Lagervorzone 21 und der Ein- und Auslager-Ebene 2 kann sich ein in den Figuren nicht gesondert gezeigter Ein- und Ausgangs-Abschnitt des Shuttle-Systems bzw. des Regalbaus 1 befinden. Hierbei können der Übergabe und Übernahme von Ladungsträgern 4 dienliche Einrichtungen und Anordnungen zum Einsatz kommen. Allerdings kann, wie dies in Bezug auf die Figuren 1 bis 3 beschrieben wurde, auch daran gedacht sein, dass eine Übergabe eines Ladungsträgers 4 von einem Kettenförderer 12.2 oder einem FTS 11 an eine Kettenförderer-Anordnung 12.1 keine besonderen Einrichtungen benötigt.

Sämtliche Fahrwege in den Ebenen 2, 3 des Regalbaus 1 können die Abstell-Schienen 20 und insbesondere die Fahrschienen 22 umfassen.

Die Flächen der Zentriermittel 15.1, 15.2 in Figur 6 fallen schräg zur Mitte des Übergabeplatzes 14.1 hin ab. Alternative Ausgestaltungen dieser Flächen sind denkbar.

Den in den Figuren 1 bis 3 nur teilweise mit Bezugsziffern versehenen zweispurigen Kettenförderer, welche von den Ketten 23 gebildet werden, ist vorzugsweise jeweils ein separater Antrieb (nicht gezeigt) zugeordnet. Auf diese Weise kann beispielsweise innerhalb einer einzigen Kettenförderer-Anordnung 12.1 ein erster dort befindlicher Ladungsträger 4 von einem der Kettenförderer bewegt werden, während ein zweiter dort befindlicher Ladungsträger 4 auf dem Übergabeplatz 7.1 oder auf dem weiteren Übergabeplatz 13.2 beispielsweise auf den Senkrechtförderer 5 oder das Shuttle 6 wartet. Jeden Pufferplatz 13.2, 7.1, 7.2, 13.1 von einem separaten Kettenförderer (wie in den Figuren 1 bis 3 gezeigt) mit separatem Antrieb (nicht dargestellt) auszubilden, ermöglicht eine grosse Flexibilität.

Alternativ kann daran gedacht sein, dass ein einziger Kettenförderer innerhalb der Kettenförderer-Anordnung mehrere Pufferplätze 13.1, 7.1, 13.2, 7.2 bildet, oder dass sich zumindest zwei Kettenförderer einen Antrieb teilen. Beispielsweise kann daran gedacht sein, die beiden weiteren Pufferplätze 13.1 auf eine der vorbeschriebenen Arten miteinander zu koppeln, so dass dort befindliche Ladungsträger 4 nur synchron und gleichzeitig bewegt werden können. Es kann auch daran gedacht sein, dass die gesamte Kettenförderer-Anordnung 12.1 von einem einzigen Kettenförderer gebildet wird.

Der Kettenförderer 12.2 in der Lagervorzone 21 kann auch eine Kettenförderer-Anordnung sein, die im Hinblick auf die Kettenförderer-Anordnung 12.1 beschriebenen Details gelten somit analog für den Kettenförderer 12.2.

Erfolgt in dem Ausführungsbeispiel gemäss Figur 1 ein Umlagern eines Ladungsträgers 4 von der Lagerebene 3 in die Ein- und Auslager-Ebene 2, so kann der aus der Lagerebene 3 kommende Senkrechtförderer 5 den Ladungsträger 4 alternativ an den links in Figur 1 gezeigten Pufferplatz 7.1 übergeben, von welchem aus ebenfalls ein Einlagern in der Ein- und Auslager-Ebene 2 erfolgen kann. Hierfür muss jedoch sichergestellt werden, dass zur selben Zeit kein Ladungsträger 4 aus der Ein- und Auslager-Ebene 2 kommend über den links oben in Figur 1 dargestellten weiteren Pufferplatz 13.2 ausgelagert werden soll, weil es sonst zu einer Blockade-Situation kommt. Vorzugsweise fördern daher die Kettenförderer der links in Figur 1 gezeigten Kettenförderer-Anordnung 12.1 nur zur Lagervorzone 21 hin, in Figur 1 also nach unten, während die Kettenförderer der rechts in Figur 1 gezeigten Kettenförderer-Anordnung 12.1 nur von der Lagervorzone 21 weg fördern, in der Darstellung nach Figur 1 also nach oben auf das Shuttle 6 zu.

Das Zentriermittel 19.1 kann klappbar, oder alternativ verschwenkbar, versenkbar oder anderweitig von einer ersten in eine zweite Position bewegbar sein. Das Zentriermittel 19.1 dient hierbei in einer ersten Position als Anschlag und ermöglicht eine Zentrierung des Ladungsträgers 4. In einer zweiten Position erlaubt das Zentriermittel 19.1 eine Durchfahrt des Ladungsträgers 4 durch den lagerseitigen Transfer-Abschnitt 8.

Sämtliche Ausführungsformen der vorliegenden Erfindung können mit derartigen bewegbaren Zentriermitteln 19.1 ausgestattet sein.

Im Allgemeinen kann daran gedacht sein, dass die Kettenförderer-Anordnung 12.1 einen oder mehrere Kettenförderer umfasst oder aus einem oder mehreren Kettenförderern besteht. Diese Kettenförderer umfassen vorzugsweise genau zwei Ketten 23. Es kann aber auch an Kettenförderern mit mehr als zwei Ketten 23 gedacht sein.

Anstelle der Lagervorzone 21 in den Figuren 1 bis 3 kann auch an eine andere ausserhalb der Regal-Ebenen 2, 3 befindliche Zone gedacht sein, wobei das FTS 11, der Kettenförderer 12.2 oder ein alternatives Fördermittel als Schnittstelle zur Anbindung dieser Zone an die Ein- und Auslager-Ebene 2 dient. Diese Zone kann auch unterhalb der Regal-Ebenen 2, 3 angeordnet sein.

Ausgehend von Figur 3 kann daran gedacht sein, dass die Ein- und Auslager-Ebene 2 den Kettenförderer 12.2 seitlich zumindest abschnittsweise umgibt. Ferner kann daran gedacht sein, dass die Lagerebene 3 den Kettenförderer 12.2 teilweise oder vollständig überbaut.

**Bezugszeichenliste**

| | | | | | |
|---|---|---|---|---|---|
| 1 | Regalbau | 34 | | | |
| 2 | Ein- und Auslager-Ebene | 35 | | | |
| 3 | Lagerebene | 36 | | | |
| 4 | Ladungsträger | 37 | | | |
| 5 | Senkrechtförderer | 38 | | | |
| 6 | Shuttle | 39 | | | |
| 7 | Pufferplatz | 40 | | | |
| 8 | Lagerseitiger Transferabschnitt | 41 | | | |
| 9 | Vorzonen-seitiger Transferabschnitt | 42 | | | |
| 10 | Senkrechtförderer-seitiger Transferabschnitt | 43 | | | |
| 11 | Fahrerloses Transportsystem (FTS) | 44 | | | |
| 12 | Kettenförderer-Anordnung | 45 | | | |
| 13 | weiterer Pufferplatz | 46 | | | |
| 14 | Übergabeplatz | 47 | | | |
| 15 | Zentriermittel | 48 | | | |
| 16 | Zinken / Teleskopgabel | 49 | | | |
| 17 | Richtung | 50 | | | |
| 18 | Richtung | 51 | | | |
| 19 | Zentriermittel | 52 | | | |
| 20 | Abstell-Schiene | 53 | | | |
| 21 | Lagervorzone | 54 | | | |
| 22 | Fahrschiene | 55 | | | |
| 23 | Kette | 56 | | | |
| 24 | Stopper | 57 | | | |
| 25 | Regalsteher | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Shuttle-System umfassend
einen Regalbau (1) mit einer Ein- und Auslager-Ebene (2) und zumindest einer Lagerebene (3) zum Lagern von Ladungsträgern (4),
einen Senkrechtförderer (5) zum Transport von Ladungsträgern (4) zwischen den Ebenen (2, 3) des Regalbaus (1),
zumindest ein Shuttle (6), welches eingerichtet ist, in den Ebenen (2, 3) des Regalbaus (1) zu verkehren,
zumindest einen Pufferplatz (7.1, 7.2, 7.3), welcher in der Ein- und Auslager-Ebene (2) unmittelbar neben dem Senkrechtförderer (5) angeordnet ist, wobei der zumindest eine Pufferplatz (7.1, 7.2, 7.3) eingerichtet ist, einen Ladungsträger (4) temporär aufzunehmen, wobei der zumindest eine Pufferplatz (7.1, 7.2, 7.3) zur Aufnahme und Abgabe des Ladungsträgers (4) einen lagerseitigen, einen Vorzonen-seitigen sowie einen Senkrechtförderer-seitigen Transferabschnitt (8, 9, 10) umfasst,
wobei das Shuttle (6) ferner eingerichtet ist, einen auszulagernden Ladungsträger (4) dem Pufferplatz (7.1, 7.3) zu übergeben und einen einzulagernden Ladungsträger (4) von dem Pufferplatz (7.1, 7.3) zu übernehmen, wobei diese Übernahme und Übergabe über den lagerseitigen Transferabschnitt (8) erfolgt,
wobei der Pufferplatz (7.1, 7.2, 7.3) ferner eingerichtet ist, einen Ladungsträger (4) auch von einem als Schnittstelle zwischen der Ein- und Auslager-Ebene (2) und einer ausserhalb der Regal-Ebenen (2, 3) befindlichen Zone (21) fungierenden Fördermittel (11, 12.2) zu übernehmen oder an dieses zu übergeben, wobei diese Übernahme und Übergabe über den Vorzonen-seitigen Transfer-Abschnitt (9) erfolgt,
wobei dem Senkrechtförderer (5) ein Mittel (16) zugeordnet ist, welches den Ladungsträger (4) aktiv von dem Pufferplatz (7.1, 7.2, 7.3) an den Senkrechtförderer (5) übergeben oder von diesem übernehmen kann, wobei diese Übernahme und Übergabe über den Senkrechtförderer-seitigen Transferabschnitt (10) erfolgt,
wobei eine Richtung (17), entlang welcher der Pufferplatz (7.1, 7.2, 7.3) den Ladungsträger (4) an das als Schnittstelle fungierende Fördermittel (11, 12.2) übergibt oder von diesem übernimmt, parallel zu einer Richtung (17) verläuft, entlang welcher das Shuttle (6) den Ladungsträger (4) an den Pufferplatz (7.1, 7.2, 7.3) übergibt oder von diesem übernimmt,
wobei eine Richtung (18), entlang welcher der Senkrechtförderer (5) den Ladungsträger (4) an den Pufferplatz (7.1, 7.2, 7.3) übergibt oder von diesem übernimmt, orthogonal zu der Richtung (17) verläuft, entlang welcher das als Schnittstelle fungierende Fördermittel (11, 12.2) den Ladungsträger (4) an den Pufferplatz (7.1, 7.2, 7.3) übergibt oder von diesem übernimmt.

2. Shuttle-System nach Anspruch 1, **gekennzeichnet durch** zumindest einen weiteren Pufferplatz (13.1) zwischen dem Vorzonen-seitigen Transfer-Abschnitt (9) und dem als Schnittstelle fungierenden Fördermittel (11, 12.2).

3. Shuttle-System nach einem der vorangehenden Ansprüche, **dadurch gekennzeichnet, dass** der Senkrechtförderer (5) das Mittel (16) umfasst, welches den Ladungsträger (4) aktiv von dem Pufferplatz (7.1, 7.2, 7.3) zum Senkrechtförderer (5) und zurück transportieren kann.

4. Shuttle-System nach einem der vorangehenden Ansprüche, **dadurch gekennzeichnet, dass** dem Senkrechtförderer (5) genau zwei unmittelbar benachbarte Pufferplätze (7.1, 7.2, 7.3) zugeordnet sind.

5. Shuttle-System nach einem der vorangehenden Ansprüche, **gekennzeichnet durch** zumindest einen weiteren Pufferplatz (13.2) welcher sich an den lagerseitigen Transfer-Abschnitt (8) anschliesst.

6. Shuttle-System nach zumindest den Ansprüchen 1, 2 und 5, **dadurch gekennzeichnet, dass** die Pufferplätze (7.1, 13.1, 13.2) von einem Stetigförderer gebildet werden.

7. Shuttle-System nach einem der vorangehenden Ansprüche, **gekennzeichnet durch** zumindest ein Zentriermittel (19), welches eingerichtet ist, einen Ladungsträger (4) zu zentrieren, nachdem dieser von dem als Schnittstelle fungierenden Fördermittel (11, 12.2) angeliefert wurde und bevor dieser von dem Shuttle (6) oder von dem Senkrechtförderer (5) übernommen wurde.

8. Shuttle-System nach einem der vorangehenden Ansprüche, **gekennzeichnet durch** zumindest einen Übergabeplatz (14), wobei der Übergabeplatz (14) eingerichtet ist, ein einen Ladungsträger (4) temporär aufzunehmen, wobei der Übergabeplatz (14) ferner zumindest ein Zentriermittel (15.1, 15.2) umfasst, welches eingerichtet ist, einen Ladungsträger (4) zu zentrieren, wenn dieser von dem Shuttle (6) oder dem Senkrechtförderer (5) auf dem Übergabeplatz (14) abgestellt wird.

9. Shuttle-System nach Anspruch 8, **dadurch gekennzeichnet, dass** der Übergabeplatz (14) zwei Abstell-Schienen (20) zum Abstellen des Ladungsträgers (4) umfasst, wobei auf diesen Abstell- Schienen (20) jeweils ein Zentriermittel (15.1) angeordnet ist, wobei eine lichte Weite zwischen den Zentriermitteln (15.1) mindestens der lichten Weite zwischen den Abstell-Schienen (20) entspricht.

10. Verfahren zum Handhaben eines Ladungsträgers (4), wobei ein Ein- oder Auslagern des Ladungsträgers (4) in oder aus einem Regalbau (1) erfolgen soll, **gekennzeichnet durch** folgenden Schritt:
- temporäres Lagern des Ladungsträgers (4) auf einem Pufferplatz (7.1, 7.2), welcher zugleich als Übergabeplatz an einen Senkrechtförderer (5) dient, oder Passieren dieses Pufferplatzes (7.1), um den Ladungsträger (4) in einer Ein-und Auslager-Ebene (2) ein- oder aus dieser auszulagern.

11. Verfahren nach Anspruch 10, wobei ein Einlagern des Ladungsträgers (4) in dem Regalbau (1) erfolgt, **gekennzeichnet durch** folgende Schritte:
- ein Fördermittel (11, 12.2) befördert den Ladungsträger (4) in die Ein- und Auslager-Ebene (2), wo der Ladungsträger zu dem Pufferplatz (7.1) befördert wird,
- falls der Ladungsträger (4) in der Ein- und Auslager-Ebene (2) eingelagert werden soll, passiert er den Pufferplatz (7.1), und wird von einem in der Ein-und Auslager-Ebene (2) verkehrenden Shuttle (6) übernommen,
- falls der Ladungsträger (4) in einer Lagerebene (3) eingelagert werden soll, wird er auf dem Pufferplatz (7.1) von dem Senkrechtförderer (5) übernommen und zur Lagerebene (3) befördert.

12. Verfahren nach Anspruch 10, wobei ein Auslagern des Ladungsträgers (4) aus dem Regalbau (1) erfolgt, **gekennzeichnet durch** folgende Schritte:
- das Shuttle (6) oder der Senkrechtförderer (5) befördert den Ladungsträger (4) zu dem Pufferplatz (7.1),
- ein Fördermittel (11, 12.2) übernimmt den Ladungsträger (4).

13. Verfahren nach einem der Ansprüche 10 oder 11, wobei der Ladungsträger vor dem temporären Lagern auf dem Pufferplatz (7.1, 7.2) oder dem Passieren des Pufferplatzes (7.1) auf einem weiteren Pufferplatz 13.2 temporär gelagert wird, falls der Pufferplatz (7.1, 7.2) von einem anderen Ladungsträger belegt ist.

14. Verfahren nach einem der Ansprüche 10 oder 12, wobei der Ladungsträger vor dem temporären Lagern auf dem Pufferplatz (7.1, 7.2) der Ladungsträger vor dem temporären Lagern auf dem Pufferplatz (7.1, 7.2) oder dem Passieren des Pufferplatzes (7.1) auf einem weiteren Pufferplatz 13.2 temporär gelagert wird, falls der Pufferplatz (7.1, 7.2) von einem anderen Ladungsträger belegt ist.

15. Verfahren gemäss einem der Ansprüche 10 bis 14, welches mit einem Shuttle-System gemäss einem der Ansprüche 1 bis 9 durchgeführt wird.
